# EUROPEAN PATENT APPLICATION

(11) **EP 4 586 008 A1**
(43) Date of publication of application: **16.07.2025**
(21) Application number: 23863540.3
(22) Date of filing: 07.09.2023
(51) Int. Cl.: G03B 17/12, H04N 23/55, G02B 7/02, H04N 23/54, B23K 1/00

(54) **CAMERA MODULE AND OPTICAL DEVICE COMPRISING SAME**

(30) Priority: 07.09.2022 KR 20220113736; 07.09.2022 KR 20220113737; 07.09.2022 KR 20220113738; 07.09.2022 KR 20220113739
(71) Applicant: LG INNOTEK CO. LTD, Gangseo-gu Seoul 07796 (KR)
(72) Inventor: HAN, Sang Yeon, Seoul 07796 (KR)
(74) Representative: DREISS Patentanwälte PartG mbB
(86) International application number: PCT/KR2023/013460
(87) International publication number: WO 2024/054076

(57) **Abstract**

A camera module according to an embodiment includes a lens driving device including a receiving space; and a lens barrel disposed in the receiving space of the lens driving device, wherein the lens barrel includes a first coupling portion, wherein the lens driving device includes a second coupling portion, and wherein the first coupling portion includes a first magnet, and the second coupling portion includes a second magnet corresponding to the first magnet.

## Description

### [Technical Field]

An embodiment invention relates to a camera module, and more particularly, to a camera module having improved coupling reliability between a lens barrel and a lens driving device, and an optical device including the same.

### [Background Art]

As various types of mobile terminals become widely distributed and wireless internet services become commercialized, consumer demands related to mobile terminals are also diversifying, and accordingly, various types of additional devices are being installed in mobile terminals.

Among the additional devices, a representative example is a camera module that can take a picture or video of a subject, save the image data, and then edit and transmit the image data as needed.

Recently, demand for small camera modules is increasing for various multimedia fields such as notebook personal computers, camera phones, PDAs, smarts, and toys, and image input devices such as information terminals of monitoring cameras and video tape recorders.

As a pixel size of a sensor applied to these camera modules becomes smaller and a height of the module decreases, the development of a mount structure to manage the inflow of foreign substances and secure the mechanical reliability of the camera module, such as the tilt or shift of a lens optical axis, is emerging as a very important topic.

In the camera module in which a lens barrel and a bobbin are coupled with threads, foreign matter is generated due to friction between male and female screws during a focusing adjustment operation, and image quality may be deteriorated due to the foreign matter generated. For this reason, a screwless type camera module is being developed.

However, when an epoxy, etc. is used for assembling the lens barrel in a process of manufacturing a camera module having a screwless type lens barrel, the epoxy penetrated between the lens barrel and the bobbin continues to move downward and transfers to an image region, thereby causing foreign material defects.

In addition, in a camera module including a screwless type lens barrel, a problem may occur in the reliability of the camera module depending on an amount of epoxy used for assembling the lens barrel.

For example, if the amount of the epoxy is less than a reference amount, a coupling force between the lens barrel and the bobbin may be weak, and the lens barrel may be separated from the bobbin. In addition, if the amount of the epoxy is less than a reference amount, there may be a problem that the accuracy of a moving position of the lens barrel decreases when performing auto-focusing or hand-shaking compensation operations.

In addition, if the amount of the epoxy above is greater than the reference amount, there may be a problem of changing a resolution of the lens during a curing process of the epoxy. For example, there is a problem that contraction occurs during the curing process of the epoxy, and a shape of the lens barrel changes due to the contraction. In addition, as the shape of the lens barrel above changes, there may be a problem that the lens is curved or an assembly structure between the lens barrel and the lens is distorted, and accordingly, there may be a problem that the optical axis of the lens is distorted.

In addition, if a rotation of the lens barrel occurs from the bobbin of the lens drive device after coupling the lens driving device and the lens barrel, the resolution of the camera module may change. Accordingly, it is important to consider a coupling position when coupling the lens driving device and the lens barrel.

In this case, a conventional technology use a vision to determine the coupling position. Here, a rotation range that can be controlled by the vision is about 10 degrees, and the coupling position may be distorted due to an error in the vision, and the coupling position may be distorted in a subsequent coupling process using epoxy.

In addition, it is difficult to manage the rotation within 1 degree between the lens barrel and the lens driving device with the conventional structure, and thus, the reliability of the lens barrel is deteriorated due to the coupling of the lens barrel to the inaccurate position.

### [Disclosure]

### [Technical Problem]

An embodiment provides a camera module capable of increasing an accuracy of a coupling position between a lens barrel and a lens driving device, and an optical device including the same.

In addition, the embodiment provides a camera module capable of automatically aligning a lens barrel and a lens driving device in an optical axis direction and an optical device including the same.

In addition, the embodiment provides a camera module capable of simplifying a coupling process of a lens barrel and a lens driving device and an optical device including the same.

In addition, the embodiment provides a camera module capable of easily checking an amount of an adhesive member applied between a lens barrel and a lens driving device and an optical device including the same.

In addition, the embodiment provides a camera module capable of easily adjusting the amount of the adhesive member applied between a lens barrel and a lens driving device and an optical device including the same.

Technical problems to be solved by the proposed embodiments are not limited to the above-mentioned technical problems, and other technical problems not mentioned may be clearly understood by those skilled in the art to which the embodiments proposed from the following descriptions belong.

### [Technical Solution]

A camera module according to a first embodiment comprises a lens driving device including a receiving space; and a lens barrel disposed in the receiving space of the lens driving device, wherein the lens barrel includes a first coupling portion, wherein the lens driving device includes a second coupling portion, and wherein the first coupling portion includes a first magnet, and the second coupling portion includes a second magnet corresponding to the first magnet.

In addition, the first magnet is positioned on the second magnet, and a center of the first magnet and a center of the second magnet are aligned in an optical axis direction.

In addition, the lens barrel includes a first flange portion; a protruding portion protruding outward from an outer surface of the first flange portion; and a first insertion groove provided at a lower surface of the protruding portion, and wherein the first magnet is disposed in the first insertion groove.

In addition, the lens driving device includes a second flange portion; a depression provided at the second flange portion and corresponding to the protruding portion; and a second insertion groove provided at a lower surface of the depression and aligned with the first insertion groove along an optical axis, and wherein the second magnet is disposed in the second insertion groove.

In addition, the lens driving device includes a bobbin including the receiving space and having a coil of a driving unit disposed on an outer circumferential surface; and a housing disposed on an outside of the bobbin and coupled with a driving magnet of the driving unit corresponding to the coil, and wherein the second flange portion, the depression, and the second insertion groove are provided in an inner portion of the bobbin.

In addition, the first coupling portion further includes a first yoke spaced apart from the first magnet in the protruding portion and disposed around the first magnet, and wherein the first yoke is provided to surround an outer surface of the first magnet facing the driving magnet.

In addition, the second coupling portion further includes a second yoke spaced apart from the second magnet in the depression and disposed around the second magnet, and the second yoke is provided to surround an outer surface of the second magnet facing the driving magnet.

In addition, the protruding portion includes a plurality of protruding portions provided on an outer surface of the first flange portion, the first coupling portion includes a plurality of first magnets provided in each of the plurality of protruding portions, the depression includes a plurality of depressions corresponding to each of the plurality of protruding portions, and the second coupling portion is aligned with the plurality of first magnets along an optical axis and is provided in each of the plurality of depressions.

In addition, a planar area of the first magnet is different from a planar area of the second magnet.

In addition, the planar area of the first magnet is smaller than the planar area of the second magnet.

In addition, the camera module further comprises a lens disposed in the lens barrel, and the lens including a freeform lens.

In addition, the camera module further comprises an adhesive member disposed between the lens barrel and the lens driving device.

In addition, the lens barrel includes a step portion connected to the first flange portion and in contact with the adhesive member, and the step portion includes a first portion having a first inclination angle in the optical axis direction, and a second portion connected to an upper end of the first portion and having a second inclination angle different from the first inclination angle in the optical axis direction.

A camera module according to a second embodiment includes a lens driving device including a receiving space; a lens barrel disposed in the receiving space of the lens driving device; and a coupling member coupling the lens driving device and the lens barrel, wherein the lens barrel includes a first metal member, the lens driving device includes a second metal member, and the coupling member is disposed on the first metal member and the second metal member.

In addition, each of the first metal member and the second metal member includes a non-magnetic metal material.

In addition, each of the first metal member and the second metal member is coupled to each of the lens barrel and the lens driving device by insert injection or double injection.

In addition, the lens barrel includes a first flange portion; and a protruding portion protruding outward from the first flange portion, and the first metal member includes a portion disposed on the protruding portion.

In addition, the lens driving device includes a bobbin, and the bobbin includes a second flange portion corresponding to the first flange portion and having a step, and the second flange portion includes a first region on which the protruding portion is seated, and a second region having a step from the first region and in which the second metal member is disposed.

In addition, an upper surface of the first metal member is exposed outwardly from the protruding portion, the upper surface of the second metal member overlaps the upper surface of the first metal member in a horizontal direction and is exposed outwardly from the bobbin, and the coupling member is disposed on the upper surface of the first metal member and the upper surface of the second metal member.

In addition, the camera module further comprises a lens disposed in the lens barrel, and the lens includes a freeform lens.

In addition, the protruding portion includes a plurality of protruding portions, and the first metal member includes a plurality of metal parts provided on each of the plurality of protruding portions and not connected to each other.

In addition, the protruding portion includes a plurality of protruding portions, and the first metal member includes a plurality of first metal parts provided on each of the plurality of protruding portions and in contact with the coupling member; and a second metal part disposed in the lens barrel and connecting between the plurality of first metal parts.

In addition, the coupling member includes a solder, and the first metal member and the second metal member are bonding pads to which the solder is bonded.

A camera module of the third embodiment includes a lens driving device including a receiving space; a lens barrel disposed in the receiving space of the lens driving device; a reinforcement frame inserted in the lens barrel; and an adhesive member disposed between an inner circumferential surface of the lens driving device and an outer circumferential surface of the lens barrel and including at least a portion in contact with the reinforcement frame.

In addition, the reinforcement frame includes a metal material.

In addition, the metal material of the reinforcement frame is a non-magnetic material.

In addition, the reinforcement frame is coupled to the lens barrel by insert injection or double injection.

In addition, the lens barrel includes a first flange portion; and a protruding portion protruding outward from an outer surface of the first flange portion; and the reinforcement frame includes a portion disposed on the protruding portion.

In addition, an outer surface of the portion of the reinforcement frame is in contact with the adhesive member.

In addition, the protruding portion includes a plurality of protruding portions, and the reinforcement frame includes a plurality of reinforcement parts provided on each of the plurality of protruding portions and not connected to each other.

In addition, the protruding portion includes a plurality of protruding portions, and the reinforcement frame includes a plurality of first reinforcement parts provided on each of the plurality of protruding portions and in contact with the adhesive member; and a second reinforcement part disposed in the lens barrel and connecting between the plurality of first reinforcement parts.

In addition, the lens module includes a receiving groove recessed inward from an outer circumferential surface of the lens module, and the reinforcement frame is disposed in the receiving groove along an circumferential direction of the outer circumferential surface of the lens module.

In addition, the lens driving device includes a bobbin including the receiving space, and the bobbin includes a second flange portion; and a depression provided in the second flange portion and corresponding to the protruding portion.

In addition, the camera module further comprises a lens disposed in the lens barrel, and the lens includes a freeform lens.

In addition, the lens barrel includes a step portion connected to the first flange portion and in contact with the adhesive member, the step portion includes a first portion having a first inclination angle in the optical axis direction, and a second portion connected to an upper end of the first portion and having a second inclination angle different from the first inclination angle in the optical axis direction.

A camera module according to a fourth embodiment includes a lens driving device including a receiving space; and a lens barrel disposed in the receiving space of the lens driving device, the lens barrel includes a first flange portion; a protruding portion protruding outward from an outer surface of the first flange portion; and a first coupling portion provided in the protruding portion, and the lens driving device includes a second flange portion; a depression provided in the second flange portion and corresponding to the protruding portion; and a second coupling portion provided in the depression and corresponding to the first coupling portion, wherein one of the first coupling portion and the second coupling portion includes a through hole, and the other of the first coupling portion and the second coupling portion includes a protrusion corresponding to the through hole.

In addition, the lens driving device includes a bobbin including the receiving space and including an outer circumferential surface on which a first coil is disposed; and a housing disposed outside the bobbin and in which a first magnet corresponding to the first coil is coupled, and the second flange portion, the depression, and the second coupling portion are provided in an inner portion of the bobbin.

In addition, each of the first coupling portion and the second coupling portion includes a region whose width changes in the optical axis direction.

In addition, each of the first coupling portion and the second coupling portion gradually increases in width from a lower side to an upper side.

In addition, the protruding portion includes a plurality of protruding portions disposed on an outer surface of the first flange portion, the first coupling portion is provided on each of the plurality of protruding portions, and the depression and the second coupling portion includes a plurality of second coupling portions provided on the second flange portion and corresponding to the plurality of protruding portions and the plurality of first coupling portions.

In addition, the first coupling portion includes a through hole, the second coupling portion includes a protrusion, the through hole is connected to an outer surface of the protruding portion, and the protrusion is connected to an inner surface of the second flange portion.

In addition, the first coupling portion includes a through hole, the second coupling portion includes a protrusion, the through hole is spaced apart from an outer surface of the protruding portion, and the protrusion is spaced apart from an inner surface of the second flange portion.

In addition, a curvature or curvature radius of the first coupling portion is different from a curvature or curvature radius of the second coupling portion.

In addition, the first coupling portion includes a through hole, and the second coupling portion includes a protrusion, and a curvature of the inner surface of the through hole of the first coupling portion is larger than a curvature of the outer surface of the protrusion of the second coupling portion, and a curvature radius of the inner surface of the through hole of the first coupling portion is smaller than a curvature radius of the outer surface of the protrusion of the second coupling portion.

In addition, the camera module further comprises a lens disposed in the lens barrel, and the lens includes a freeform lens.

In addition, the camera module further comprises an adhesive member disposed between the lens barrel and the lens driving device.

In addition, the lens barrel includes a step portion connected to the first flange portion and in contact with the adhesive member, and the step portion includes a first portion having a first inclination angle in the optical axis direction, and a second portion connected to an upper end of the first portion and having a second inclination angle different from the first inclination angle in the optical axis direction.

### [Effects of the Invention]

The camera module of the embodiment may include a lens barrel and a lens driving device. In addition, the lens barrel may have a first flange portion, and the lens driving device may include a bobbin having a second flange portion. The first flange portion may have a protruding portion, and the second flange portion may have a depression corresponding to the protruding portion.

The protruding portion may improve a coupling strength between the lens barrel and the bobbin. For example, the protruding portion may increase a contact area with an adhesive member formed between the lens barrel and the bobbin. For example, the adhesive member may be formed to fill the inside of the depression of the bobbin and surround the protruding portion of the first flange portion of the lens barrel. The protruding portion increases a contact area between the lens barrel and the adhesive member, so that the lens barrel may be firmly coupled to the bobbin. For example, the adhesive member may be formed to surround a lower surface, a side surface, and an upper surface of the protruding portion. Accordingly, a contact area between the adhesive member and the lens barrel is increased compared to a comparative example that does not include the protruding portion, and thus the coupling force between the lens barrel and the bobbin is improved by the adhesive member.

A plurality of protruding portions may be provided with a first coupling portion. The first coupling portion may include a first magnet. Meanwhile, a depression may be provided with a second coupling portion corresponding to the first coupling portion. The second coupling portion may be a second magnet corresponding to the first magnet. In addition, the coupling of the lens barrel and the bobbin may be performed using the first coupling portion and the second coupling portion. Accordingly, the embodiment can easily determine a coupling position of the lens barrel and the bobbin, and further improve the accuracy of the coupling position. Furthermore, the embodiment can solve a problem of the lens barrel being rotated within the bobbin by the adhesive member disposed between the lens barrel and the bobbin. For example, the lens barrel can be rotated within the bobbin before the adhesive member is applied or during the curing process after the adhesive member is applied. At this time, since the embodiment is in a state where the lens barrel and the bobbin are coupled by using the first coupling portion and the second coupling portion, and accordingly, it is possible to solve the rotation problem in the process of applying the adhesive member. Accordingly, the embodiment can improve a resolution by increasing the coupling accuracy between the lens barrel and the bobbin, and can improve operating characteristics of the camera module accordingly.

Furthermore, since the first coupling portion and the second coupling portion are each provided with a magnet, a center of the first coupling portion and a center of the second coupling portion can be aligned in the optical axis direction simply by disposing the first coupling portion on the second coupling portion. Accordingly, the embodiment can automatically perform an alignment process of the lens barrel and the bobbin in the optical axis direction, and can simplify the process accordingly. Furthermore, the embodiment can improve the alignment accuracy in the optical axis direction between the lens barrel and the bobbin as the alignment automatically performs. Through this, the embodiment can improve operating characteristics of the camera module.

In addition, the lens barrel of the camera module in the embodiment includes a first step portion divided into a plurality of parts having different inclination angles. The first step portion is formed at an upper side of the first flange portion of the lens barrel, and thus, an amount of the adhesive member formed between the lens barrel and the bobbin can be easily checked, and the amount of the adhesive member can be easily adjusted. For example, in a camera module including a screwless type lens barrel such as the embodiment, a problem may occur in the reliability of the camera module depending on the amount of the adhesive member used for assembling the lens barrel. For example, if the amount of the adhesive member is less than a reference amount, the coupling force between the lens barrel and the bobbin is weak, which may cause a problem in which the lens barrel is separated from the bobbin. Furthermore, if the amount of the adhesive member is less than the reference amount, accuracy of a movement position of the lens barrel may decrease when performing an auto-focusing or shake compensation operation. In addition, if the amount of the adhesive member is more than the reference amount, a resolution of the lens may change during a curing process of an epoxy constituting the adhesive member. For example, there is a problem that contraction occurs during the curing process of the epoxy, and a shape of the lens barrel changes due to the contraction. In addition, as the shape of the lens barrel changes, there may be a problem that the lens is curved or an assembly structure between the lens barrel and the lens is distorted, and thus a problem of distortion of the optical axis of the lens may occur.

Accordingly, the embodiment allows the first step portion to be provided on an outer surface of the lens barrel so that the amount of the adhesive member can be easily adjusted while easily identifying the amount of the adhesive member applied between the lens barrel and the bobbin. In addition, the first step portion may have a step. For example, the first step portion may include a first portion, a second portion, and a third portion. In addition, the first portion, the second portion, and the third portion may have different inclination angles in the optical axis direction. Accordingly, the embodiment allows the amount of the adhesive member to be easily adjusted while easily identifying the amount of the adhesive member applied between the lens barrel and the bobbin by covering only the first portion, the first portion and the second portion, or the third portion.

In addition, the bobbin in the embodiment may include a second step portion formed on an inner portion thereof. The second step portion may enable confirmation and control of the amount of adhesive member applied between the lens barrel and the bobbin. For example, the lens barrel includes a first step portion divided into three step portions. Accordingly, the embodiment may proceed with an application amount and confirmation of the adhesive member in three steps based on the three step portions. However, depending on a product specification, the application amount and confirmation of the adhesive member may have to be performed in four or more steps.

Accordingly, the embodiment allows the second step portion to be formed in the bobbin. For example, the second step portion includes a first portion having a step from the inner portion and a second portion having a step from the first portion. At this time, the first portion of the second step portion may be positioned higher than the first step portion formed in the lens barrel. For example, a lowermost end of a first portion of the second step portion may be positioned higher than an uppermost end of a third portion of the first step portion of the lens barrel. To this end, it is possible to additionally check the application amount and confirmation of the adhesive member through the first portion of the second step portion.

Furthermore, if a portion of the adhesive member flows into the inside of the lens driving device due to an error in the adjustment of the application amount of the adhesive member, normal operation of the lens barrel may be impossible. At this time, the second step portion of the bobbin includes a plurality of step portions, thereby enabling the application amount of the adhesive member to be checked and adjusted, and preventing the adhesive member from overflowing into the inside of the lens driving device.

In addition, the embodiment may couple the lens barrel and the lens driving device using a solder bonding method. Specifically, the lens barrel of the embodiment may include a first metal member. In addition, the bobbin of the lens driving device may include a second metal member corresponding to the first metal member. The first and second metal members may be used as bonding pads for bonding a coupling member such as a solder. The embodiment may form a coupling member by performing bonding on the first and second metal members using the solder. Accordingly, the embodiment can minimize a change in characteristics that occurs when the lens barrel and the lens driving device are coupled.

Specifically, a conventional technology couples the lens barrel and the lens driving device using epoxy. At this time, when the epoxy is used, contraction and expansion occur when the epoxy is cured, and thus the characteristic change due to a deformation of the lens barrel occurs. In contrast, an embodiment may prevent a characteristic from being changed due to the deformation of the lens barrel. Accordingly, the embodiment can prevent a dimensional change of the lens barrel and solve the problem of a resolution of the camera module being reduced due to the dimensional change. Through this, the embodiment can improve the operating characteristics of the camera module.

In addition, the embodiment can improve a rigidity of the lens barrel and the lens driving device by using the first metal member and the second metal member. Accordingly, the embodiment can improve a movement accuracy of the lens barrel and/or the lens driving device.

Another embodiment of the camera module may include a lens barrel and a lens driving device. The lens barrel may have a first flange portion, and the lens driving device may have a bobbin including a second flange portion. The first flange portion may have a protruding portion, and the second flange portion may have a depression corresponding to the protruding portion.

The protruding portion may improve the coupling strength between the lens barrel and the bobbin. For example, the protruding portion may increase a contact area with an adhesive member formed between the lens barrel and the bobbin. For example, the adhesive member may be formed to fill an interior of the depression of the bobbin and surround the protruding portion of the first flange portion of the lens barrel. The protruding portion may increase a contact area between the lens barrel and the adhesive member, thereby allowing the lens barrel to be firmly coupled to the bobbin. For example, the adhesive member may be formed to surround the lower surface, side surface, and upper surface of the protruding portion. Accordingly, compared to a comparative example that does not include the protruding portion, the contact area between the adhesive member and the lens barrel is increased, and thus the coupling force between the lens barrel and the bobbin by the adhesive member is improved.

The lens barrel of the embodiment may include a reinforcement frame of a metal material. The reinforcement frame may be inserted into the lens barrel. The lens barrel and the reinforcement frame may be injection-molded products manufactured by double injection or insert injection. The reinforcement frame may have a function of improving the rigidity of the lens barrel. In addition, the reinforcement frame may prevent a change in characteristics of the lens barrel. For example, the reinforcement frame may prevent a change in the characteristics of the lens barrel due to contraction and expansion that occurs during curing of the adhesive member. Through this, the embodiment may prevent a change in dimensions of the lens barrel, and may solve a problem in which a resolution of the camera module is reduced due to the change in the dimensions.

Meanwhile, at least a part of the reinforcement frame may be exposed to an outer surface of the lens barrel. For example, the reinforcement frame may include a portion exposed through the outer surface of the protruding portion of the lens barrel. In addition, at least a part of the adhesive member applied to couple the lens driving device and the lens barrel may be in contact with the reinforcement frame. In addition, the adhesive member may have a higher adhesive strength to the reinforcement frame made of a metal material than the lens barrel or the bobbin of the lens driving device made of an insulating material. Accordingly, the embodiment may further increase the coupling strength between the lens barrel and the lens driving device.

Furthermore, the embodiment may improve heat dissipation characteristics as the adhesive member is in contact with the reinforcement frame of the lens barrel. For example, the reinforcement frame may have a function of transferring heat generated in the lens barrel in addition to a function of improving the rigidity of the lens barrel. Through this, the adhesive member may dissipate heat transmitted through the reinforcement frame to an outside. Through this, the embodiment may increase the heat dissipation characteristics of the camera module and improve the operational reliability of the camera module.

Furthermore, in another embodiment, the first coupling portion provided in the plurality of protruding portions may be formed to be concave inwardly from the outer surface of the protruding portion. The first coupling portion may be a through hole penetrating the protruding portion. In addition, a second coupling portion corresponding to the first coupling portion may be provided in a depression. The second coupling portion may be a protrusion inserted into the through hole. In addition, the coupling of the lens barrel and the bobbin may be performed using the first coupling portion and the second coupling portion. Accordingly, the embodiment may easily determine a coupling position of the lens barrel and the bobbin, and further improve the accuracy of the coupling position. Furthermore, the embodiment may solve the problem of the lens barrel being rotated within the bobbin by the adhesive member disposed between the lens barrel and the bobbin. For example, the lens barrel may be rotated within the bobbin before the adhesive member is applied or during a curing process after the adhesive member is applied. At this time, since the embodiment is in a state where the lens barrel and the bobbin are coupled by using the first coupling portion and the second coupling portion, the rotation problem in the process of applying the adhesive member can be solved. Through this, the embodiment can improve the resolution by increasing the coupling accuracy between the lens barrel and the bobbin, and can improve the operating characteristics of the camera module accordingly.

In addition, the first coupling portion can have a shape and size corresponding to the second coupling portion. Preferably, the first coupling portion can have a radius of curvature smaller than a radius of curvature of the second coupling portion. The radius of curvature of the first coupling portion can mean a radius of curvature of an inner surface of the first coupling portion. Accordingly, a curvature of the inner surface of the first coupling portion can be larger than a curvature of an outer surface of the second coupling portion. Accordingly, the lens barrel can be rotated within a certain angle with respect to the bobbin in a state where the first coupling portion is inserted into the second coupling portion. Accordingly, the embodiment can manage the rotation of the lens barrel in the bobbin to within 1 degree.

### [Description of Drawings]

FIG. 1 is a perspective view of a camera module according to a first embodiment.
FIG. 2 is an exploded perspective view of a camera module according to a first embodiment.
FIG. 3 is a cross-sectional view of the camera module of FIG. 1 in a A-A' direction.
FIG. 4 is an enlarged view of a partial region of FIG. 3.
FIG. 5 is a perspective view of a lens barrel according to a first embodiment.
FIG. 6 is an enlarged view of an outer surface of the lens barrel of FIG. 5.
FIG. 7 is a plan view of the lens barrel.
FIG. 8 is a perspective view of a lens driving device according to a first embodiment.
FIG. 9 is an enlarged view of an inner surface of a bobbin of FIG. 8.
FIG. 10 is an enlarged view of a part of a cross-sectional view of the camera module of FIG. 1 in a A-A' direction.
FIG. 11 is an enlarged view of a part of a cross-sectional view of FIG. 1 in a B-B' direction.
FIG. 12 is a view for explaining a relationship between a first step portion of a lens barrel and a lens according to an embodiment.
FIG. 13 is a view showing a coupling force between a lens barrel and a bobbin according to an amount of an adhesive member applied according to an embodiment.
FIG. 14 and FIG. 15 are views showing a degree of deformation of a lens barrel according to an amount of an adhesive member applied according to an embodiment.
FIG. 16 to 19 are plan views showing modification examples of the first coupling portion, the second coupling portion, the lens barrel, and the bobbin according to a first embodiment.
FIG. 20 is a perspective view of a camera module according to a second embodiment.
FIG. 21 is an exploded perspective view of a camera module according to a second embodiment.
FIG. 22 is a perspective view of a lens barrel according to a second embodiment.
FIG. 23 and FIG. 24 are cross-sectional views of the lens barrel of FIG. 20 cut in a horizontal direction.
FIG. 25 is a perspective view of a lens driving device according to a second embodiment.
FIG. 26 is an enlarged view of an inner surface of the bobbin of FIG. 25.
FIG. 27 is a view showing a state of coupling of a lens barrel and a lens driving device before a coupling member of a second embodiment is disposed.
FIG. 28 is a view showing an arrangement state of an coupling member in the coupled state of FIG. 27.
FIG. 29 is a view showing a deformation of a lens barrel in an epoxy bonding method of a comparative example.
FIG. 30 is a perspective view of a lens barrel according to a third embodiment.
FIG. 31 is an enlarged view of an outer surface of the lens barrel of FIG. 30.
FIGS. 32 and 33 are cross-sectional views of a lens barrel of a third embodiment cut in a horizontal direction.
FIG. 34 is a perspective view of a lens driving device according to a third embodiment.
FIG. 35 is an enlarged view of an inner surface of the bobbin of FIG. 34.
FIG. 36 is a view showing a modification example of a lens barrel and a reinforcement frame according to a third embodiment.
FIG. 37 is a perspective view of a lens barrel according to a fourth embodiment.
FIG. 38 is an enlarged view of an outer surface of the lens barrel of FIG. 37.
FIG. 39 is a plan view of a lens barrel according to a fourth embodiment.
FIG. 40 is a perspective view of a lens driving device according to a fourth embodiment.
FIG. 41 is an enlarged view of an inner surface of the bobbin of FIG. 40.
FIG. 42 is a plan view of a lens driving device according to a fourth embodiment.
FIG. 43 is a coupling diagram of a lens barrel and a bobbin according to a fourth embodiment.
FIG. 44 is a plan view showing a modification example of a lens barrel according to a fourth embodiment.
FIG. 45 is a plan view showing a modification example of a bobbin of a lens driving device according to a fourth embodiment.
FIG. 46 is a coupling diagram of a lens barrel and a bobbin of a lens driving device according to FIGS. 44 and 45.
FIG. 47 is a perspective view of a portable terminal according to an embodiment.
FIG. 48 is a configuration diagram of a portable terminal shown in FIG. 47.

### [Best Mode]

Hereinafter, embodiments of the present disclosure will be described in detail with reference to the accompanying drawings.

However, the spirit and scope of the present disclosure is not limited to a part of the embodiments described, and may be implemented in various other forms, and within the spirit and scope of the present disclosure, one or more of the elements of the embodiments may be selectively combined and redisposed.

In addition, unless expressly otherwise defined and described, the terms used in the embodiments of the present disclosure (including technical and scientific terms) may be construed the same meaning as commonly understood by one of ordinary skill in the art to which this invention belongs, and the terms such as those defined in commonly used dictionaries may be interpreted as having a meaning that is consistent with their meaning in the context of the relevant art.

In addition, the terms used in the embodiments of the present disclosure are for describing the embodiments and are not intended to limit the present disclosure. In this specification, the singular forms may also include the plural forms unless specifically stated in the phrase, and may include at least one of all combinations that may be combined in A, B, and C when described in "at least one (or more) of A (and), B, and C".

Further, in describing the elements of the embodiments of the present disclosure, the terms such as first, second, A, B, (a), and (b) may be used. These terms are only used to distinguish the elements from other elements, and the terms are not limited to the essence, order, or order of the elements. In addition, when an element is described as being "connected", "coupled", or "contacted" to another element, it may include not only when the element is directly "connected" to, "coupled" to, or "contacted" to other elements, but also when the element is "connected", "coupled", or "contacted" by another element between the element and other elements.

Further, when described as being formed or disposed "on (over)" or "under (below)" of each element, the "on (over)" or "under (below)" may include not only when two elements are directly connected to each other, but also when one or more other elements are formed or disposed between two elements. Furthermore, when expressed as "on (over)" or "under (below)", it may include not only an upper direction but also a lower direction based on one element.

An optical axis direction used below may be defined as an optical axis direction of a lens coupled to a camera actuator and a camera module, and a vertical direction may be defined as a direction perpendicular to the optical axis.

An auto-focus function used below may be defined as a function that automatically focuses on a subject by moving the lens in the optical axis direction according to a distance of the subject so that a clear image of the subject can be obtained on an image sensor.

Meanwhile, the auto focus may correspond to AF. Also, closed-loop auto-focus (CLAF) control may be defined as real-time feedback (feedback) control of a position of a lens by sensing a distance between an image sensor and the lens to improve accuracy of focus control.

Also, before describing the embodiments of the invention, a first direction may refer to a x-axis direction illustrated in the drawing, and a second direction may be a direction different from the first direction. For example, the second direction may refer to a y-axis direction illustrated in the drawing and a direction perpendicular to the first direction. Also, a third direction may be a direction different from the first and second directions. For example, the third direction may refer to a z-axis direction illustrated in the drawing and a direction perpendicular to the first and second directions. Here, the third direction may refer to an optical axis direction.

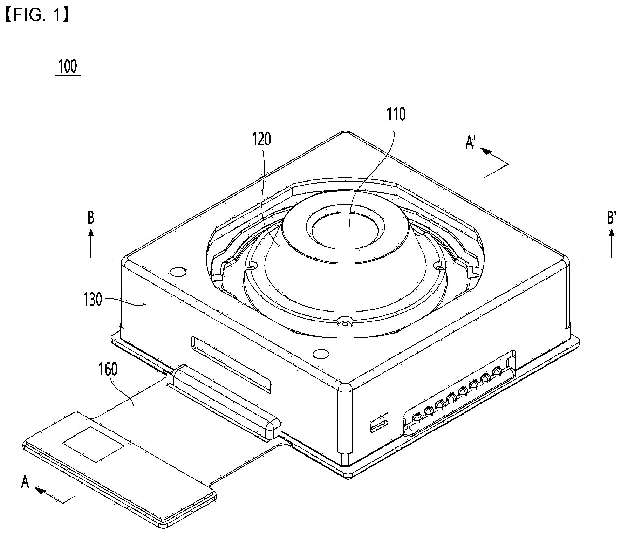

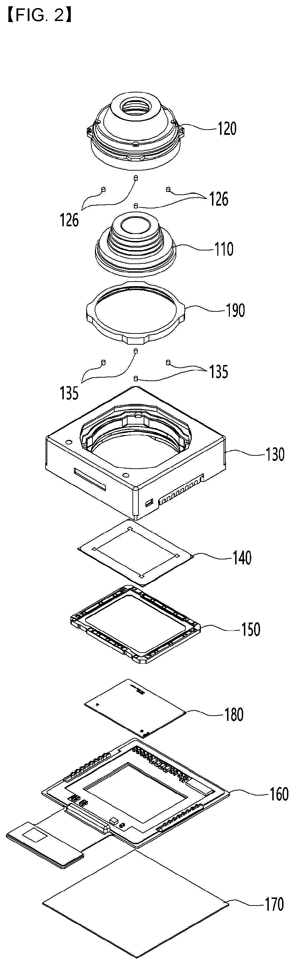

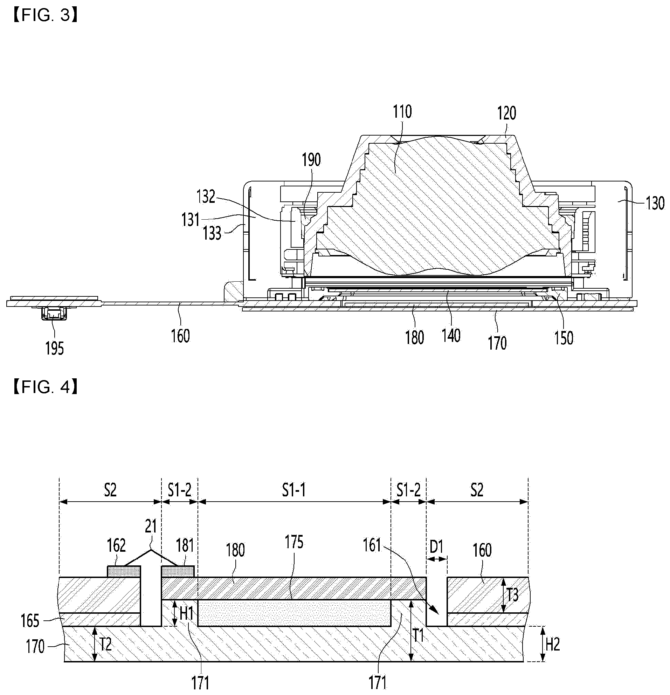

FIG. 1 is a perspective view of a camera module according to a first embodiment, FIG. 2 is an exploded perspective view of a camera module according to a first embodiment, FIG. 3 is a cross-sectional view of the camera module of FIG. 1 in a A-A' direction, and FIG. 4 is an enlarged view of a partial region of FIG. 3.

Referring to FIGS. 1 to 4, the camera module 100 may include a lens 110, a lens barrel 120, a lens driving device 130, a filter 140, a holder 150, a circuit board 160, a reinforcement plate 170, an image sensor 180, and an adhesive member 190. Here, the camera module 100 may be expressed as a camera or a photographing device, and the holder 150 may be expressed as a sensor base. The lens driving device 130 may also be referred to as an actuator that drives the lens or the lens barrel.

In addition, the camera module of the embodiment may further include a blocking member (not shown) disposed on the filter 140, although not shown in the drawing.

In addition, the camera module of the embodiment may further include an adhesive member (not shown) disposed between the holder 150 and the filter 140.

In addition, the camera module of the embodiment may include a motion sensor (not shown), a control device (not shown), and a connector (not shown) disposed on a circuit board 160.

The lens 110 or the lens barrel 120 may be mounted on the lens driving device 130. Preferably, the lens 110 may be disposed inside the lens barrel 120. The lens barrel 120 may be mounted on the lens driving device 130.

Specifically, the lens driving device 130 may include a bobbin (to be described later). The lens barrel 120 may be coupled to the bobbin of the lens driving device 130. To this end, an adhesive member 190 may be disposed between an outer surface of the lens barrel 120 and an inner surface of the bobbin. The lens barrel 120 may be coupled to the bobbin of the lens driving device 130 through the adhesive member 190.

The lens driving device 130 may drive the lens barrel 120 in which the lens 110 is accommodated.

The lens 110 may be an optical system in which three or more lenses are laminated. The lens 110 may be an optical system in which five or more lenses are laminated. The lens 110 may be an optical system in which eight or more lenses are laminated. In this case, the drawing illustrates that the lens 110 includes eight lenses, but is not limited thereto. For example, the lens 110 may have a laminated structure of less than eight lenses, or may have a laminated structure of nine or more lenses. The lens 110 may include at least one lens made of a plastic material, or may include at least one lens made of a glass material and a lens made of a plastic material. According to an embodiment of the present invention, the lens 110 may have more plastic lenses than glass lenses or may have two or more plastic lenses. Here, the lens 110 may be laminated with plastic lenses or/and glass lenses. Here, the plastic material may have a coefficient of thermal expansion (CTE) of at least 5 times higher than that of the glass material, and a change value of a refractive index according to a function of temperature (|dN/Dt|) may be at least 10 times higher for the plastic material than for the glass material. Here, dN represents a change value of the refractive index of the lens, and dT represents a change value of a temperature.

Preferably, the lens 110 may include a freeform lens. In addition, in the embodiment, an effect of a coupling structure between the lens barrel 120 and the bobbin 132 may be maximized when the lens is a freeform lens.

That is, the freeform lens may have an asymmetrical structure. In addition, the freeform lens may have a resolution change that is sensitive to rotation. Accordingly, the embodiment can prevent rotation of the lens module while the lens module is disposed in the lens driving device, thereby improving operating characteristics of the camera module.

The camera module 100 can be either an camera module for AF (Auto Focus) or an camera module OIS (Optical Image Stabilizer). The camera module for AF refers to a camera that can perform only an auto focus function, and the camera module for OIS refers to a camera that can perform both an auto focus function and an OIS (Optical Image Stabilizer) function.

For example, the lens driving device 130 may be a lens driving device for AF or a lens driving device for OIS. Here, meanings of "for AF" and "for OIS" may be the same as described in the camera module for AF and the camera module for OIS.

For example, the lens driving device 130 of the camera module 100 can be an OIS lens driving device.

The lens driving device 130 may include a housing 131 and a bobbin 132 disposed within the housing 131 and coupled with the lens barrel 120.

In addition, although not specifically illustrated in the drawing, the lens driving device 130 may include a first coil (not illustrated) disposed at the bobbin 132 and a magnet (not illustrated) disposed at the housing 131 and facing the first coil. In addition, the lens driving device 130 may include at least one upper elastic member (not illustrated) coupled to an upper portion of the housing 131 and an upper portion of the bobbin 132, and at least one lower elastic member (not illustrated) coupled to a lower portion of the bobbin 132 and a lower portion of the housing 131.

In addition, the lens driving device 130 may include a second coil (not shown) disposed under the bobbin 132 or the housing 131, a driving substrate (not shown) disposed under the second coil, and a base (not shown) disposed under the driving substrate.

Meanwhile, the bobbin 132 may also be referred to as a 'holder' to which the lens barrel 120 is coupled.

In addition, the lens driving device 130 may include a cover member 133 coupled to the base and providing a space for accommodating components of the lens driving device 130 together with the base.

In addition, the lens driving device 130 may further include a support member (not shown) electrically connecting the driving substrate and the upper elastic member and supporting the housing 131 relative to the base. Each of the first coil and the second coil may be electrically connected to the driving substrate and may receive a driving signal (driving current) from the driving substrate.

For example, the upper elastic member may include a plurality of upper springs, the support member may include support members connected to the upper springs, and the first coil may be electrically connected to the driving substrate through the upper springs and the support member. The driving substrate may include a plurality of terminals, and some of the plurality of terminals may be electrically connected to each of the first coil and/or the second coil.

The lens driving device 130 of the embodiment may move the bobbin 132 and the lens or lens barrel 120 coupled to the bobbin 132 in an optical axis direction by an electromagnetic force caused by an interaction between the first coil and the magnet. In addition, a displacement of the bobbin 132, a displacement of the lens barrel 120 coupled to the bobbin 132, and a displacement of the lens 110 coupled to the lens barrel 120 in the optical axis direction is controlled by the electromagnetic force, thereby implementing AF driving.

In addition, the lens driving device 130 can move the housing 131 in a direction perpendicular to the optical axis by an electromagnetic force caused by an interaction between the second coil and the magnet, thereby implementing the image stabilization or OIS driving.

In addition, for the AF feedback driving, the lens driving device 130 of the camera module 100 can further include a sensing magnet (not shown) disposed at the bobbin 132 and an AF position sensor (e.g., a hall sensor, not shown) disposed at the housing 131. In addition, the lens driving device 130 can further include a circuit board (not shown) disposed at the housing or/and the base and on which the AF position sensor is disposed or mounted. In another embodiment, the AF position sensor can be disposed at the bobbin and the sensing magnet can be disposed at the housing. In addition, the lens driving device 130 may further include a balancing magnet disposed at the bobbin 132 to correspond to the sensing magnet.

The AF position sensor may output an output signal according to a result of detecting an intensity of a magnetic field of the sensing magnet according to a movement of the bobbin 132. The AF position sensor may be electrically connected to the driving substrate through the upper elastic member (or the lower elastic member) or/and the support member. The driving substrate may provide a driving signal to the AF position sensor, and an output signal of the AF position sensor may be transmitted to the driving substrate.

A camera module according to another embodiment may include a housing coupled with a lens or lens barrel 120 instead of the lens driving device 130 of FIG. 1 and fixed to the lens or lens barrel 120, and the housing may be coupled or attached to an upper surface of the holder 150. The housing attached or fixed to the holder 150 may not move, and a position of the housing may be fixed while attached to the holder 150.

The circuit board may be electrically connected to the coil and the AF position sensor, and a driving signal may be provided to each of the coil and the AF position sensor through the circuit board, and the output signal of the AF position sensor may be transmitted to the circuit board.

The holder 150 may be disposed under the lens driving device 130.

The filter 140 is mounted to the holder 150, and the holder 150 may have a seating portion on which the filter 140 is seated.

At this time, an adhesive member (not shown) may be applied between the holder 150 and the filter 140, and the holder 150 may be coupled or attached to the lens driving device 130 through the adhesive member. For example, the adhesive member may be disposed between a lower surface of the base constituting the lens driving device 130 and an upper surface of the holder 150 to adhere them to each other. The adhesive member disposed between the holder 150 and the lens driving device 130 may also serve to prevent foreign substances from entering an inside of the lens driving device 130. For example, the adhesive member may be an epoxy, a thermosetting adhesive, an ultraviolet-curable adhesive, etc.

The filter 140 may be disposed in the seating portion of the holder 150. For example, the seating portion of the holder 150 may be a protruding portion protruding from an upper surface of the holder 150. For example, the seating portion of the holder 150 may be in a form of a recess, a cavity, or a hole concaved from an upper surface of the holder 150.

The seating portion of the holder 150 may serve to prevent a lower end of the lens 110 or lens barrel 120 from contacting or colliding with the filter 140.

At this time, a protruding portion of the holder 150 may be formed to protrude along a side surface of the filter 140 in the optical axis direction. For example, the protruding portion of the holder 150 may be disposed around the side surface of the filter 140 so as to surround the side surface of the filter 140.

An inner surface of the protruding portion of the holder 150 may be provided to face the side surface of the filter 140, and the holder and the filter may be spaced apart from each other. This is to secure a processing tolerance for easily seating the filter 140 on an inner surface of the seating portion of the holder 150.

In addition, an upper surface of the protruding portion of the holder 150 may be positioned higher than the upper surface of the filter 140 in the optical axis direction. This is to prevent a lower end of the lens 110 or lens barrel 120 from directly colliding with the filter 140 when the lens 110 or lens barrel 120 is mounted on the lens driving device 130 and moves in the optical axis direction or moves toward the filter 140 due to an external impact.

A shape of the protruding portion of the seating portion as viewed from an upper side may be identical to a shape of the filter 140, but is not limited thereto. In other embodiments, a shape of the protruding portion of the seating portion may be similar to or different from a shape of the filter 140.

The holder 150 may have an opening formed at a portion where the filter 140 is mounted or disposed so that light passing through the filter 140 may be incident on the image sensor 180.

For example, the opening may penetrate the holder 150 in the optical axis direction and may be expressed as a "through hole".

For example, the opening may penetrate a center of the holder 150 and may be provided within the seating portion, and an area of the opening may be smaller than an area of the filter 140.

The holder 150 is disposed on the circuit board 160 and may accommodate the filter 140 therein. The holder 150 may support the lens driving device 130 located at an upper side of the holder. A lower surface of the base of the lens driving device 130 may be disposed on an upper surface of the holder 150.

For example, a lower surface of the base of the lens driving device 130 may be in contact with an upper surface of the holder 150 and may be supported by the upper surface of the holder 150.

For example, the filter 140 may be disposed within the seating portion of the holder 150. The filter 140 may block light of a specific frequency band in the light passing through the lens barrel 120 from being incident on the image sensor 180. For example, the filter 140 may be an infrared blocking filter, but is not limited thereto. For example, the filter 140 may be disposed parallel to an x-y plane perpendicular to the optical axis OA.

The circuit board 160 may be disposed at a lower side of the holder 150, and the holder 150 may be disposed on an upper surface of the circuit board 160.

The holder 150 may be attached or fixed to the upper surface of the circuit board 160 by an adhesive member such as epoxy, a thermosetting adhesive, or an ultraviolet-curable adhesive. At this time, the adhesive member may be disposed between a lower surface of the holder 150 and an upper surface of the circuit board 160.

The circuit board 160 may have a cavity 161 corresponding to the opening of the holder 150. The cavity 161 of the circuit board 160 may be a through hole type penetrating the circuit board 160 in the optical axis direction.

An image sensor 180 may be disposed in the cavity 161 of the circuit board 160.

A reinforcement plate 170 may be disposed below the circuit board 160 and may include a protruding portion 171 corresponding to the cavity 161 of the circuit board 160 and for mounting the image sensor 180.

The protruding portion 171 may protrude in the optical axis direction from some region of the upper surface of the reinforcement plate 170. The image sensor 180 is disposed on the upper surface of the protruding portion 171 and can be exposed through the cavity 161 of the circuit board 160.

The image sensor 180 disposed on the upper surface of the protruding portion 171 of the reinforcement plate 170 can be electrically connected to the circuit board 160 through a wire 21. For example, the wire 21 can connect a terminal 181 of the image sensor 180 and a terminal 162 of the circuit board 160 to each other.

The reinforcement plate 170 is a plate-shaped member having a preset thickness and hardness, and can stably support the image sensor 180 and prevent the image sensor from being damaged by external impact or contact.

In addition, the reinforcement plate 170 can improve a heat dissipation effect of dissipating heat generated from the image sensor to an outside.

For example, the reinforcement plate 170 may be formed of a metal material having high thermal conductivity, such as SUS, aluminum, etc., but is not limited thereto. In other embodiments, the reinforcement plate 170 may be formed of glass epoxy, plastic, or synthetic resin.

In addition, the reinforcement plate 170 may be electrically connected to the ground terminal of the circuit board 160, thereby acting as a ground to protect the camera module from ESD (Electrostatic Discharge Protection).

The image sensor 180 may be a portion where light passing through the filter 140 is incident and an image included in the light is formed.

The circuit board 160 may be equipped with various circuits, devices, control units, etc. to convert the image formed on the image sensor 180 into an electrical signal and transmit the image to an external device. A circuit pattern electrically connected to the image sensor and various devices may be formed on the circuit board 160.

The holder 150 may be expressed to as a first holder, and the circuit board 160 may be expressed to as a second holder.

The image sensor 180 may receive an image included in the light incident through the lens driving device 130 and convert the received image into an electrical signal.

The filter 140 and the image sensor 180 may be spaced apart from each other so as to face each other in the optical axis direction OA or the first direction.

Meanwhile, a blocking member (not shown) may be disposed on an upper surface of the filter 140. The blocking member may be expressed to as a "masking member."

For example, the blocking member may be disposed on an edge region of the upper surface of the filter 140, and may serve to block at least a portion of the light incident toward the edge region of the filter 140 through the lens 110 or the lens barrel 120 from passing through the filter 140. For example, the blocking member may be combined or attached to the upper surface of the filter 140.

For example, the filter 140 may be formed in a square shape when viewed in the optical axis direction, and the blocking member may be formed symmetrically with respect to the filter 140 along each side of the upper surface of the filter 140.

At this time, the blocking member may be formed to have a constant width on each side of the upper surface of the filter 140.

The blocking member may be formed of an opaque material. For example, the blocking member may be provided as an adhesive material of an opaque material applied to the filter 140 or may be provided in a form of a film attached to the filter 140.

The filter 140 and the image sensor 180 may be disposed to face each other in the optical axis direction, and the blocking member may overlap at least a portion of the terminal 162 and/or the wire 21 disposed on the circuit board 160 in the optical axis direction.

The wire 21 and the terminal 162 may be formed of a conductive material, such as gold, silver, copper, or a copper alloy, and the conductive material may have a characteristic of reflecting light. Light passing through the filter 140 may be reflected by the terminal 162 and the wire 21 of the circuit board 160, and a momentary flash, i.e., a flare phenomenon, may occur due to the reflected light, and the flare phenomenon may distort the image formed on the image sensor 180 or deteriorate the image quality.

Since the blocking member is disposed so as to overlap at least a portion of the terminal 162 and/or the wire 21 in the optical axis direction, the light passing through the lens 110 or the lens barrel 120 toward the terminal 162 of the circuit board 160 or/and the wire 21 can be blocked to prevent the occurrence of the flare phenomenon described above, and accordingly, the image formed on the image sensor 180 can be prevented from being distorted or the image quality from being deteriorated.

Meanwhile, a motion sensor (not shown) is mounted or disposed on the circuit board 160, and the motion sensor can be electrically connected to a control device (not shown) through a circuit pattern provided on the circuit board 160.

The motion sensor outputs rotational angular velocity information due to a movement of the camera module 100. The motion sensor can be implemented as a two-axis or three-axis gyro sensor or an angular velocity sensor. The control device is mounted or disposed on the circuit board 160.

The circuit board 160 may be electrically connected to the lens driving device 130. For example, the circuit board 160 may be electrically connected to the driving substrate of the lens driving device 130.

For example, a driving signal may be provided to each of the first coil and the second coil of the lens driving device 130 through the circuit board 160, and a driving signal may be provided to the AF position sensor (or OIS position sensor). In addition, the output of the AF position sensor (or OIS position sensor) may be transmitted to the circuit board 160.

The connector 190 may be electrically connected to the circuit board 160 and may have a port for electrically connecting with an external device.

A first adhesive member 175 may be disposed between a lower surface of the image sensor 180 and the reinforcement plate 170, and the image sensor 180 may be attached or fixed on the reinforcement plate 170 by the first adhesive member 175.

At this time, the reinforcement plate 170 may be divided into a plurality of regions. For example, the reinforcement plate 170 may include a first region S1 and a second region S2. The first region S1 may be a region overlapping the image sensor 180 in the optical axis direction OA. The first region S1 may be a region overlapping the cavity 161 of the circuit board 160 in the optical axis direction OA. The first region S1 may be a region to which the image sensor 180 is attached. The second region S2 may be a region to which a second adhesive member 165 is disposed. The second region S2 may be a region overlapping the circuit board 160 in the optical axis direction OA.

In addition, a protruding portion 171 is provided in the first region S1 of the reinforcement plate 170. At this time, the reinforcement plate 170 and the protruding portion 171 may be a single plate formed integrally with each other.

The image sensor 180 may be attached or fixed to an upper surface of the protruding portion 171. For example, at least a part of the lower surface of the image sensor 180 may be in direct contact with the upper surface of the protruding portion 171. That is, the first adhesive member 1750 in the embodiment may be selectively formed in a region of the first region S1 where the protruding portion 171 is not formed. Accordingly, at least a first portion of the image sensor 180 may be in direct contact with the protruding portion 171, and at least a second portion of the image sensor 180 may be in direct contact with the first adhesive member 175. That is, the second portion of the image sensor 180 may be attached or fixed to the first adhesive member 175 while the first portion is supported by the protruding portion of the reinforcement plate 170. Accordingly, in the embodiment, at least a part of the image sensor 180 is made to directly contact the protruding portion 171 of the reinforcement plate 170, thereby minimizing a bending phenomenon of the image sensor 180. In addition, in the embodiment, at least a part of the image sensor 180 is made to directly contact the protruding portion of the reinforcement plate 170, thereby efficiently transmitting heat generated from the image sensor 180 to an outside.

Accordingly, in the embodiment, an area of the image sensor 180 may be larger than an area of the first adhesive member 175. That is, only a part of the area of the image sensor 180 may be in contact with the first adhesive member 1750. That is, in a first embodiment, a first portion of the lower surface of the image sensor 180 may be in contact with the protruding portion 171 of the reinforcement plate 170, and the second portion of the lower surface of the image sensor 180, excluding the first portion, may be in contact with the first adhesive member 1750.

The first adhesive member 175 may be an epoxy, a thermosetting adhesive, an ultraviolet-curable adhesive, an adhesive film, etc., but is not limited thereto.

In addition, a second adhesive member 165 may be disposed between a lower surface of the circuit board 160 and an upper surface of the second region S2 of the reinforcement plate 170, and the circuit board 160 may be attached or fixed to the reinforcement plate 170 by the second adhesive member 165. For example, the second adhesive member 165 may be an epoxy, a thermosetting adhesive, an ultraviolet-curable adhesive, an adhesive film, , but is not limited thereto.

Meanwhile, an area of the upper surface of the protruding portion 171 may be smaller than an area of a lower surface of the image sensor 180. For example, only the first portion of the lower surface of the image sensor 180 may be in contact with the protruding portion 171. Accordingly, the area of the upper surface of the protruding portion 171 is smaller than the area of the lower surface of the image sensor 180.

A height of the upper surface of the protruding portion 171 of the reinforcement plate 170 may be lower than a height of the upper surface of the circuit board 160 disposed on the reinforcement plate 170 based on the lower surface of the reinforcement plate 170. For example, the reinforcement plate 170 may include a first region S1 and a second region S2, and the first region S1 may be a region to which the image sensor 180 is attached, and the second region S2 may be a region to which the circuit board 160 is attached.

In addition, the first region S1 may include a first-first region S1-1 in which the first adhesive member 175 is disposed, and a first-second region S1-2 in which the protruding portion 171 is disposed. In addition, the first-first region S1-1 may have a same height as the second region S2.

The first region S1 of the reinforcement plate 170 may include a protruding portion 171 protruding from the lower surface of the reinforcement plate toward the upper surface of the reinforcement plate based on the first-first region S1-1, and the image sensor 180 may be disposed on an upper surface of the protruding portion 171.

For example, among the first region S1 of the reinforcement plate 170, the first-second region S1-2 may include a protruding portion 171 protruding more than the first-first region S1-1 and the second region S2 of the reinforcement plate 170.

A thickness T1 of the first-second region S1-2 of the reinforcement plate 170 is thicker than a thickness T2 of the first-first region S1-1 and the second region S2 (T1 >T2). In addition, since T1>T2, distortion of the upper surface of the protruding portion 171 of the reinforcement plate 170 can be suppressed, and a flatness of the upper surface of the protruding portion 171 can be improved. As a result, the embodiment can improve the reliability of the image sensor 180 disposed on the upper surface of the protruding portion 171, and can improve an optical performance of the camera module.

Since the second region S2 of the reinforcement plate 170 has a constant thickness, the embodiment may not be affected by an overall height of the camera module. In addition, since the image sensor 180 is disposed on the upper surface of the protruding portion 171 and in direct contact with the protruding portion, a height difference between the upper surface of the circuit board 160 and the upper surface of the image sensor 180 is reduced, so that a wire length between the circuit board 160 and the image sensor 180 is shortened, thereby improving the reliability of wire bonding.

The protruding portion 171 of the reinforcement plate 170 may include a plurality of protrusions that are mutually spaced apart from each other in the first region S1 of the reinforcement plate 170 with the first-first region S1-1 interposed therebetween.

Meanwhile, in the embodiment, the lens barrel 120 in which the lens 110 is accommodated and the bobbin 132 of the lens driving device 130 may be coupled in a screwless type. Recently, since an error range of the optical axis alignment is required more rigorously with a trend of demanding high-performance camera modules, a screwless coupling method may be more efficient than a screw coupling method.

In the screwless coupling method, the lens barrel 120 may be inserted into a hollow portion of the bobbin 132 from an upper or lower side, and then the lens barrel 120 may be fixed to the bobbin 132 using an adhesive member 190.

At this time, the lens barrel 120 may include a first coupling portion 126. In addition, the bobbin 132 may include a second coupling portion 135 corresponding to the first coupling portion 126.

The first coupling portion 126 may be a first magnetic body provided in the lens barrel 120. For example, the first coupling portion 126 may be a magnet.

The second coupling portion 135 may be a second magnetic body provided in the bobbin 132. For example, the second coupling portion 135 may be a magnet. However, the embodiment is not limited thereto.

For example, the first coupling portion 126 and the second coupling portion 135 may be configured to generate an attractive force between each other. However, the embodiment is such that a center of the first coupling portion 126 in the optical axis direction and a center of the second coupling portion 135 in the optical axis direction are aligned in the optical axis direction so that mutual coupling is performed. To this end, the first coupling portion 126 and the second coupling portion 135 may include magnets so that they are mutually coupled at a position where centers are aligned in the optical axis direction.

The lens barrel 120 may be provided with a first insertion groove into which the first coupling portion 126 is inserted. In addition, the bobbin 132 may be provided with a second insertion groove into which the second coupling portion 135 is inserted. Through this, the first coupling portion 126 may be inserted into the first insertion groove and fixed in the first insertion groove. In addition, the second coupling portion 135 may be inserted into the second insertion groove and fixed in the second insertion groove.

In addition, the coupling of the lens barrel 120 and the bobbin 132 can be performed using the first coupling portion 126 and the second coupling portion 135. Through this, the embodiment can easily determine a coupling position of the lens barrel 120 and the bobbin 132, and further improve the accuracy of the coupling position. Furthermore, the embodiment can solve the problem of the lens barrel 120 being rotated within the bobbin 132 in a process of applying or curing the adhesive member 190 between the lens barrel 120 and the bobbin 132. For example, the lens barrel 120 can be rotated within the bobbin 132 before the adhesive member 190 is applied or in a curing process after the adhesive member 190 is applied. At this time, since the embodiment is in a state where the lens barrel 120 and the bobbin 132 are coupled by using the first coupling portion 126 and the second coupling portion 135, a rotation problem in a process of applying the adhesive member 190 can be solved. Accordingly, the embodiment can improve a resolution by increasing the accuracy of the coupling position between the lens barrel 120 and the bobbin 132, and can improve operating characteristics of the camera module accordingly.

Meanwhile, by applying the adhesive member 190 between an inner surface of the bobbin 132 and an outer surface of the lens barrel 120 while the lens barrel 120 is coupled by the first coupling portion 126 and the second coupling portion 135, the bobbin 132 and the lens barrel 120 can be firmly fixed.

At this time, the adhesive member 190 may be implemented as a thermosetting epoxy or a UV epoxy, and may be cured by exposure to heat or UV. However, if the adhesive member 190 is implemented as a thermosetting epoxy, the bobbin 132 and the lens barrel 120 may be cured by moving them to an oven, or by directly applying heat. In addition, if the adhesive member 190 is implemented as a UV (ultraviolet) epoxy, the adhesive member 190 may be cured by applying the UV. In addition, the adhesive member 190 may be implemented as an epoxy that can be cured by mixing thermal curing and UV curing, and may be an epoxy that can be cured by selecting either thermal curing or UV curing. The adhesive member 190 is not limited to an epoxy, and any adhesive material capable of fixing the lens barrel 120 to the bobbin 132 may be substituted.

Hereinafter, the lens barrel 120, the bobbin 132, and a coupling structure therebetween according to the embodiment will be specifically described.

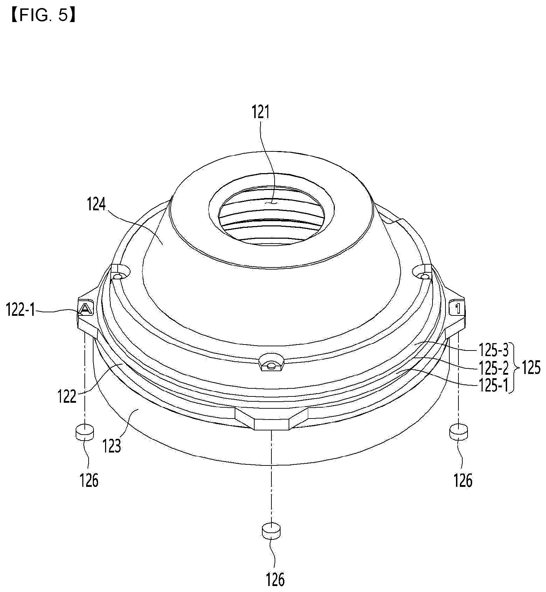

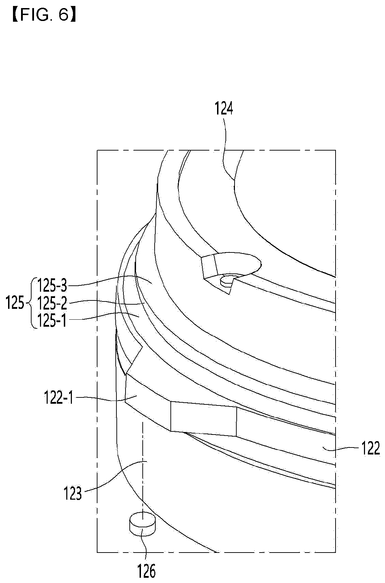

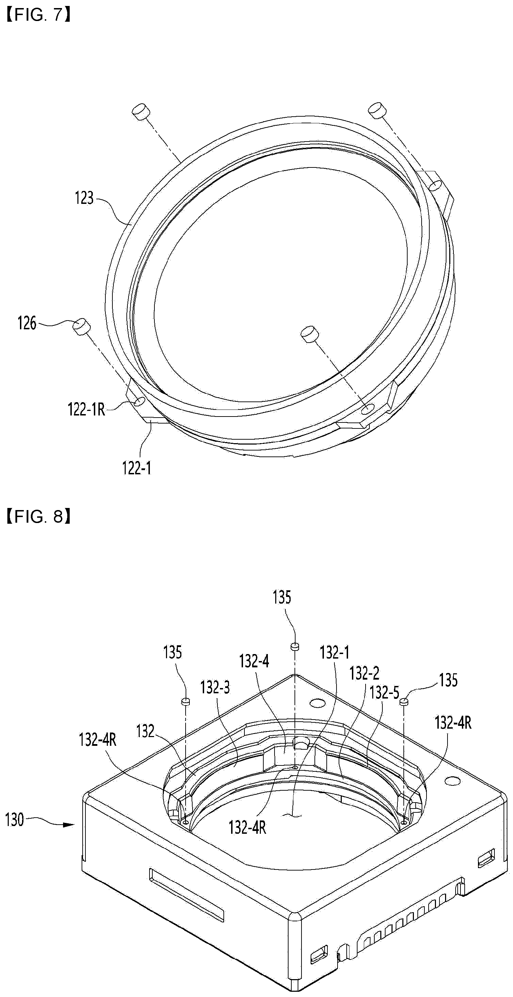

FIG. 5 is a perspective view of a lens barrel according to a first embodiment, FIG. 6 is an enlarged view of an outer surface of the lens barrel of FIG. 5, and FIG. 7 is a bottom view of the lens barrel.

Referring to FIGS. 5 to 7, the lens barrel 120 according to the embodiment may include an opening 121 penetrating the lens barrel in the optical axis direction. The opening 121 may expose the lens 110 accommodated inside the lens barrel 120.

The lens barrel 120 may include a side portion. The side portion of the lens barrel 120 may have different inclination angles for each region. For example, the lens barrel 120 may have an outer diameter corresponding to an outer diameter of the lens 110 accommodated inside the lens barrel 120. However, the lens barrel 120 in the embodiment may include a portion having an outer diameter for coupling between the lens barrel 120 and the bobbin 132, regardless of the outer diameter of the lens 110 accommodated therein.

For example, the lens barrel 120 may include a first flange portion 122.

The first flange portion 122 may protrude outwardly from an outer surface of the lens barrel 120. The first flange portion 122 may mean a portion having a largest outer diameter in an entire region of the lens barrel 120. The first flange portion 122 may function as a stopper to limit downward movement of the lens barrel 120 when the lens barrel 120 is assembled to the bobbin 132. For example, when the bobbin 132 and the lens barrel 120 are coupled, the lens barrel 120 can be inserted into an upper end portion of the bobbin 132 and move downward. At this time, the first flange portion 122 can limit a downward movement of the lens barrel 120 within the bobbin 132. For example, the bobbin 132 includes a second flange portion (to be described later) corresponding to the first flange portion 122 of the lens barrel 120. In addition, when the lens barrel 120 moves downward to the maximum within the bobbin 132, the first flange portion 122 of the lens barrel 120 can come into contact with the second flange portion of the bobbin 132, and thus a downward movement of the lens barrel can be limited.

However, in the embodiment, an outer surface of the lens barrel 120 and an inner surface of the bobbin 132 do not directly contact each other. For example, there is no contact surface that directly contacts each other between the outer surface of the lens barrel 120 and the inner surface of the bobbin 132. For example, an air gap of a predetermined width may be formed between the outer surface of the lens barrel 120 and the inner surface of the bobbin 132, and the adhesive member 190 may be provided to fill the air gap. Accordingly, the first flange portion 122 of the lens barrel 120 may not substantially directly contact the second flange portion of the bobbin 132.

Meanwhile, in the embodiment, a protruding portion 122-1 may be formed on the first flange portion 122 of the lens barrel 120. The protruding portion 122-1 may protrude outwardly from the outer surface of the first flange portion 122 of the lens barrel 120. A plurality of protruding portions 122-1 may be formed on the outer surface of the first flange portion 122. For example, the protruding portions 122-1 may be formed to face each other in a first direction (for example, the x-axis direction) perpendicular to the optical axis based on the optical axis. For example, the protruding portions 122-1 may be formed to face each other in a second direction (for example, the y-axis direction) perpendicular to the optical axis and the first direction based on the optical axis.

The protruding portion 122-1 may support a stopper function of the first flange portion 122. For example, when assembling the lens barrel 120 to the bobbin 132 and the lens barrel 120 moves downward to the maximum within the bobbin 132, the protruding portion 122-1 can be accommodated in a depression (to be described later) of the bobbin 132, and can limit the downward movement of the lens barrel 120, together with the first flange portion 122.

Furthermore, the protruding portion 122-1 can improve the coupling strength between the lens barrel 120 and the bobbin 132. For example, the protruding portion 122-1 can increase the contact area with the adhesive member 190 formed between the lens barrel 120 and the bobbin 132. For example, the adhesive member 190 may be formed to fill an interior of the depression 132-4 of the bobbin 132 and surround the protruding portion 122-1 of the first flange portion 122 of the lens barrel 120. The protruding portion 122-1 increases a contact area between the lens barrel 120 and the adhesive member 190, so that the lens barrel 120 may be firmly coupled to the bobbin 132. For example, the adhesive member 190 may be formed to surround the lower surface, the side surface, and the upper surface of the protruding portion 122-1. Accordingly, compared to the comparative example that does not include the protruding portion 122-1, the contact area between the adhesive member 190 and the lens barrel 120 is increased, and thus the coupling force between the lens barrel 120 and the bobbin 132 by the adhesive member 190 is improved.

Meanwhile, different indicators (not shown) may be engraved on each of the plurality of protruding portions 122-1. For example, different letters may be engraved on the plurality of protruding portions 122-1. Accordingly, in the embodiment, when the bobbin 132 and the lens barrel 120 are coupled, a coupling position of the lens barrel 120 can be accurately recognized, and thus the coupling processability between the bobbin 132 and the lens barrel 120 may be improved.

The plurality of protruding portions 122-1 may be provided with a first coupling portion 126. Preferably, the first coupling portion 126 may be provided in each of the plurality of protruding portions 122-1. At this time, the plurality of protruding portions 122-1 may be four, and accordingly, the first coupling portion 126 may also be four. However, the embodiment is not limited thereto. For example, the embodiment may be provided with the first coupling portion 126 only in two protruding portions 122-1 facing each other based on the optical axis.

The first coupling portion 126 may be provided facing a lower surface of the depression of the bobbin 132 in the plurality of protruding portions 122-1. For example, the plurality of protruding portions 122-1 may include a lower surface facing the lower surface of the depression of the bobbin 132. In addition, a first insertion groove 122-1R may be provided at a lower surface of the protruding portion 122-1.

The first coupling portion 126 may be inserted and fixed into the first insertion groove 122-1R provided on a lower surface of the protruding portion 122-1. The first coupling portion 126 may be a magnetic body. The first coupling portion 126 may be a magnet. The first coupling portion 126 may generate an attractive force together with the second coupling portion 135. Therefore, the first coupling portion 126 may be mutually coupled with the second coupling portion 135 in a state where centers are aligned in the optical axis direction.

In one embodiment, a planar area of the first coupling portion 126 may be the same as a planar area of the second coupling portion 135.

In another embodiment, a planar area of the first coupling portion 126 may be different from a planar area of the second coupling portion 135. Preferably, when the lens barrel 120 and the bobbin 132 are coupled, the first coupling portion 126 is positioned on the second coupling portion 135. Accordingly, the embodiment allows a planar area of the second coupling portion 135, which is positioned relatively lower among the first coupling portion 126 and the second coupling portion 135, to be larger than the planar area of the first coupling portion 126. Accordingly, the embodiment can easily align the centers of the first coupling portion 126 and the second coupling portion 135.

The lens barrel 120 may include a lower end portion 123 positioned below the first flange portion 122 based on the first flange portion 122, and an upper end portion 124 positioned above the first flange portion 122.

The lower end portion 123 of the lens barrel 120 may have an outer diameter corresponding to an outer diameter of a lens 110 accommodated in a receiving portion corresponding to the lower end portion 123 of the lens barrel 120.

In addition, the upper end portion 124 of the lens barrel 120 may have an outer diameter corresponding to an outer diameter of a lens 110 accommodated in a receiving portion corresponding to the upper end portion 124 of the lens barrel 120.

At this time, outer surfaces of the upper end portion 124 and the lower end portion 123 of the lens barrel 120 may have a certain inclination angle in the optical axis direction, but are not limited thereto.

The outer diameter of the upper end portion 124 of the lens barrel 120 may be smaller than the outer diameter of the first flange portion 122. In addition, the outer diameter of the upper end portion 124 of the lens barrel 120 may be larger than the outer diameter of the lower end portion 123 of the lens barrel 120. In addition, the outer diameter of the lower end portion 123 of the lens barrel 120 may be smaller than the outer diameters of the first flange portion 122 and the lower end portion 123.

Meanwhile, in the embodiment, a first step portion 125 may be formed between the first flange portion 122 and the upper end portion 124 of the lens barrel 120.

The first step portion 125 is formed between the first flange portion 122 and the upper end portion 124 of the lens barrel 120 and may have a predetermined inclination angle in the optical axis direction. For example, an outer surface of the first step portion 125 may have a predetermined inclination angle in the optical axis direction. At this time, the outer surface of the first step portion 125 may include a first portion 125-1 having a first inclination angle and a second portion 125-2 having a second inclination angle different from the first inclination angle. Furthermore, the outer surface of the first step portion 125 in the embodiment may include a third portion 125-3 having a third inclination angle different from the second inclination angle.

In the embodiment, the lens barrel 120 includes a first step portion 125 divided into a plurality of parts having different inclination angles.

The first step portion 125 is formed at an upper side of the first flange portion 122 of the lens barrel 120, and thus, an amount of the adhesive member 190 applied between the lens barrel 120 and the bobbin 132 can be easily determined, while easily controlling the amount of the adhesive member 190.

For example, in a camera module including a screwless type lens barrel such as the embodiment, a problem may occur in the reliability of the camera module depending on the amount of the adhesive member 190 used for assembling the lens barrel.

For example, if the amount of the adhesive member 190 is less than a reference amount, a coupling force between the lens barrel 120 and the bobbin 132 is weak, so that the lens barrel 120 may be separated from the bobbin 132. Furthermore, if the amount of the adhesive member 190 is less than the reference amount, the accuracy of a movement position of the lens barrel 120 may decrease when performing auto-focusing or shake compensation operations. In addition, if the amount of the adhesive member 190 is more than the reference amount, a resolution of the lens 110 may change during a curing process of the epoxy constituting the adhesive member 190. For example, contraction may occur during a curing process of the epoxy, and there is a problem that a shape of the lens barrel 120 changes due to the contraction. In addition, as a shape of the lens barrel 120 changes, there may be a problem that the lens 110 is curved or an assembly structure between the lens barrel 120 and the lens 110 is distorted, and accordingly, a problem of distortion of the optical axis of the lens 110 may occur.

Accordingly, in the embodiment, in order to easily determine the amount of the adhesive member 190 applied between the lens barrel 120 and the bobbin 132, and to easily control the amount of the adhesive member 190, a first step portion 125 is formed on at outer surface of the lens barrel 120. In addition, the first step portion 125 may have a step. That is, the first step portion 125 may include a plurality of step portions. For example, the first step portion 125 may include at least two portions having different inclination angles. However, the embodiment is not limited thereto, and step portions constituting the first step portion 125 may be formed in three or more numbers. That is, as illustrated in the drawing, the step portions constituting the first step portion 125 may include a first portion 125-1, a second portion 125-2, and a third portion 125-3. In addition, the first portion 125-1, the second portion 125-2, and the third portion 125-3 may have different inclination angles in the optical axis direction. Accordingly, in the embodiment, the adhesive member 190 covers only the first portion 125-1, or covers the first portion 125-1 and the second portion 125-2, or covers the first portion 125-1, the second portion 125-2, and the third portion 125-3, thereby making it possible to easily determine the amount of the adhesive member 190 applied between the lens barrel 120 and the bobbin 132, and easily control the amount of the adhesive member 190.

For example, when applying the adhesive member 190, it is necessary to determine an amount of the adhesive member 190 that can minimize deformation of the lens barrel 120 or change in resolution of the lens 110 during curing of the adhesive member 190 while maintaining the coupling force between the lens barrel 120 and the bobbin 132.

However, in a case of conventional lens barrels or bobbins, it is difficult to intuitively determine how much of the adhesive member has been applied and how much should be applied during the process of applying the adhesive member.

Accordingly, in the embodiment, a first step portion 125 is formed at the outer surface of the lens barrel 120 where the adhesive member 190 is applied, and an application amount of the adhesive member 190 can be easily determined and controlled using the first step portion 125.

For example, the first step portion 125 includes a first portion 125-1, a second portion 125-2, and a third portion 125-3 having different inclination angles.

In addition, uppermost positions of the first portion 125-1, the second portion 125-2, and the third portion 125-3 can be distinguished by an application amount of the adhesive member 190. For example, when the adhesive member 190 is applied to the first portion 125-1, an application amount of the adhesive member 190 may be "A", when the adhesive member 190 is applied to the second portion 125-2, an application amount of the adhesive member 190 may be "B", and when the adhesive member 190 is applied to the third portion 125-3, an application amount of the adhesive member 190 may be "C".

Accordingly, in the embodiment, during the assembling process of the camera module 100, when an application amount of adhesive member 190 is "A" to prevent deformation of the lens barrel 120 or change in resolution of the lens 110 while maintaining the coupling force between the lens barrel 120 and the bobbin 132, an application amount of the adhesive member 190 can be easily controlled by applying the adhesive member 190 to a position corresponding to the first portion 125-1. At this time, when the application amount of adhesive member 190 is "A", an outer surface of the first portion 125-1 is not visible from an outside, and an outer surface of the second portion 125-2 and the third portion 125-3 of the first step portion 125 may be checked from the outside. Accordingly, in the embodiment, the application amount of the adhesive member 190 is determined, and the application amount of the adhesive member 190 is checked and adjusted using the first step portion 125, so that the adhesive member 190 can be formed corresponding to the determined application amount. Accordingly, the embodiment facilitates checking and adjusting the application amount of the adhesive member 190, thereby securing the ease of the coupling process between the lens barrel 120 and the bobbin 132. Furthermore, the embodiment can accurately adjust the application amount of the adhesive member 190 by a predetermined amount to improve the coupling force between the lens barrel 120 and the bobbin 132, and minimize the deformation of the lens barrel 120 or the decrease in the resolution of the lens 110 due to the curing of the above adhesive member 190.

Meanwhile, a first inclination angle of the first portion 125-1 of the first step portion 125, a second inclination angle of the second portion 125-2, and a third inclination angle of the third portion 125-3 of the first step portion 125 may have an angle toward the inside of the lens barrel 120 in an upward direction.

Specifically, an outer diameter of the first portion 125-1 of the first step portion 125 of the lens barrel 120 may decrease toward the upward direction. In addition, an outer diameter of the second portion 125-2 of the first step portion 125 of the lens barrel 120 may decrease toward the upward direction. In addition, an outer diameter of the third portion 125-3 of the first step portion 125 of the lens barrel 120 may decrease toward the upward direction. Through this, in the embodiment, it is easy to check whether the outer surface of the first portion 125-1, the outer surface of the second portion 125-2, and the outer surface of the third portion 125-3 are exposed according to the application amount of the adhesive member 190 from the outside.

For example, if the first step portion 125 of the lens barrel 120 has an inclination angle in which the outer diameter increases toward the upward direction, it is impossible to check the first step portion 125 from the outside, and thus the application amount of the adhesive member 190 cannot be easily checked.

Meanwhile, the first step portion 125 may have more than three step portions, but if the number of step portions in the lens barrel 120 is increased, a thickness of the lens barrel 120 becomes too thin toward the upward direction, and thus, a problem may occur in which the lens 110 cannot be stably disposed inside lens barrel 120. Therefore, in the embodiment, the first step portion 125 includes three step portions. However, the number of step portions formed in the lens barrel 120 may increase or decrease depending on the increase or decrease in the number of lens barrels 120 accommodated in the lens barrel 120.

Meanwhile, in the embodiment, the outer diameters of each step portion of the first step portion 125 may be different from each other.

For example, an average outer diameter of the first portion 125-1 of the first step portion 125 may be larger than an average outer diameter of the second portion 125-2 of the first step portion 125. In addition, an average outer diameter of the third portion 125-3 of the first step portion 125 may be smaller than an average outer diameters of each of the first portion 125-1 and the second portion 125-2 of the first step portion 125. Through this, in the embodiment, it is easy to check the application amount of the adhesive member 190 from the outside, and accordingly, it is easy to control the application amount of adhesive member 190.

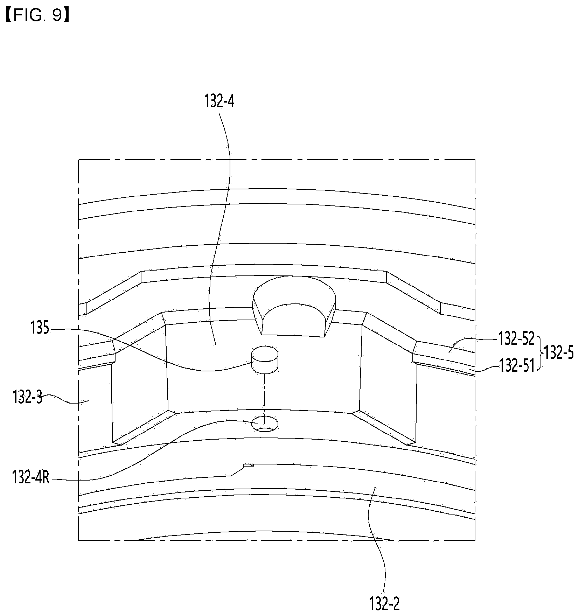

FIG. 8 is a perspective view of a lens driving device according to a first embodiment, and FIG. 9 is an enlarged view of an inner surface of a bobbin of FIG. 8.

Referring to FIG. 8 and FIG. 9, the lens driving device 130 may include a bobbin 132. The bobbin 132 may include a hollow portion 132-1 in which the lens barrel 120 is received therein. The bobbin 132 may include an inner surface facing the outer surface of the lens barrel 120. For example, the bobbin 132 may include a second flange portion 132-2. The second flange portion 132-2 may function as a stopper to limit movement of the lens barrel 120 together with the first flange portion 122 of the lens barrel 120 when the lens barrel 120 moves to the maximum in the downward direction within the hollow portion 132-1.

The bobbin 132 may include an inner portion 132-3 provided on the second flange portion 132-2. The inner portion 132-3 of the bobbin 132 may mean an inner surface of the bobbin 132 facing the first flange portion 122 and the first step portion 125 of the lens barrel 120.

The inner portion 132-3 of the bobbin 132 may include a depression 132-4 corresponding to the protruding portion 122-1 formed in the first flange portion 122 of the lens barrel 120. In addition, the depression 132-4 may contact the protruding portion 122-1 of the lens barrel 120 when the lens barrel 120 moves downward to the maximum within the hollow portion of the bobbin 132, thereby limiting the downward movement of the lens barrel 120.

The depression 132-4 of the bobbin 132 may be provided with a second coupling portion 135 corresponding to the first coupling portion 126. The second coupling portion 135 may be disposed at a lower surface of the depression 132-4.

Specifically, a second insertion groove 132-4R may be provided at the lower surface of the depression 132-4 of the bobbin 132. In addition, the second coupling portion 135 may be disposed in the second insertion groove 132-4R.

Meanwhile, the depression 132-4 may be provided in multiple numbers. For example, the depression 132-4 may include a plurality of depressions 132-4 corresponding to each of the plurality of protruding portions 122-1. The depression 132-4 may be provided in four numbers based on the direction perpendicular to the optical axis to correspond to the protruding portion 122-1.

The inner portion 132-3 of the bobbin 132 may face the first step portion 125 of the lens barrel 120. In addition, a step may not be formed in a region of the inner portion 132-3 of the bobbin 132 facing the first step portion 125 of the lens barrel 120. However, the depression 132-4 is formed in one region of the inner portion 132-3, and accordingly, a region of the inner portion 132-3 where the step is not formed may mean a region excluding a region where the depression 132-4 is formed.

For example, when a step is formed in the inner portion 132-3 of the bobbin 132 facing the first step portion 125 of the lens barrel 120, when adjusting the application amount of the adhesive member 190, it is necessary to check the amount applied in the step portion of the lens barrel 120 and the amount applied in the step of the inner portion 132-3, and thus, it may be difficult to check and control an exact application amount. Therefore, in the embodiment, the step is not provided in the first region facing the first step portion 125 of the lens barrel 120 except for the depression 132-4 in the inner portion 132-3 of the bobbin 132.

The application amount of adhesive member 190 is checked by the first step portion 125 formed on the lens barrel 120. In this case, the first step portion 125 is limited in a formation region for stable support of the lens 110 accommodated in the lens barrel 120.

Accordingly, in the embodiment, the bobbin 132 may include a second step portion 132-5 formed at the inner portion 132-3.

The second step portion 132-5 can enable check and control of the amount of adhesive member 190 applied between the lens barrel 120 and the bobbin 132.

For example, the lens barrel 120 includes a first step portion 125 divided into three step portions. Through this, in the embodiment, the application amount and confirmation of the adhesive member 190 can be performed in three steps based on the three step portions. However, depending on product specifications, the application amount and confirmation of the adhesive member 190 may need to be performed in four or more steps.

Through this, in the embodiment, the second step portion 132-5 is formed on the bobbin 132.

For example, the second step portion 132-5 includes a first portion 132-51 having a step from the inner portion 132-3 and a second portion 132-52 having a step from the first portion 132-51. At this time, a first portion 132-51 of the second step portion 132-5 may be positioned higher than a first step portion 125 formed on the lens barrel 120. For example, a lowermost end of the first portion 132-51 of the second step portion 132-5 may be positioned higher than an uppermost end of the third portion 125-3 of the first step portion 125 of the lens barrel 120. To this end, the embodiment additionally enables the application amount and confirmation of the adhesive member 190 by using the first portion 132-51 of the second step portion 132-5.

In addition, if a portion of the adhesive member 190 flows into the inside of the lens driving device 130 due to an error in a control of the amount of the adhesive member 190, normal operation of the lens barrel 120 may be impossible.

In addition, the second step portion 132-5 of the bobbin 132 includes a plurality of step portions, thereby enabling the check and control of the amount of the adhesive member 190 to be applied, and preventing the adhesive member 190 from overflowing into the inside of the lens driving device 130.

A coupling structure of the lens barrel 120 and the bobbin 132 is described as follows. A protruding portion 122-1 may be provided at the first flange portion of the lens barrel 120. In addition, a first insertion groove 122-1R may be provided at a lower surface of the protruding portion 122-1. In addition, a first coupling portion 126 can be inserted and fixed into the first insertion groove 122-1R.

In addition, a depression 132-4 can be provided at the bobbin 132. The depression 132-4 can correspond to the protruding portion 122-1 of the lens barrel 120. In addition, a second insertion groove 132-4R can be provided at a lower surface of the depression 132-4 of the bobbin 132. In addition, a second coupling portion 135 can be inserted and fixed into the second insertion groove 132-4R.

In addition, when the protruding portion 122-1 is seated on the depression 132-4 while the lens barrel 120 is disposed in the receiving space within the bobbin 132, mutual coupling can be achieved by a magnetism acting on the first coupling portion 126 and the second coupling portion 135. At this time, a center of the first coupling portion 126 and a center of the second coupling portion 135 can be automatically aligned in the optical axis direction by the magnetism. Through this, the embodiment can omit a separate process for the alignment, and thus can achieve process simplification.

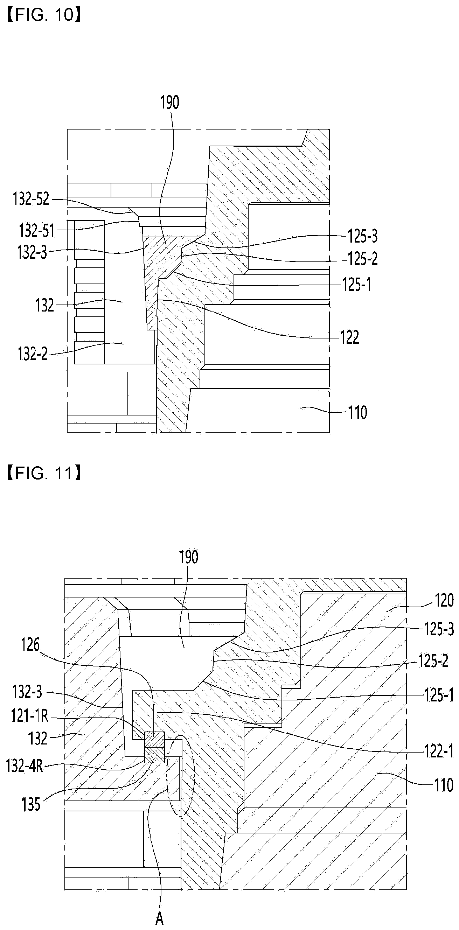

FIG. 10 is an enlarged view of a part of a cross-sectional view of the camera module of FIG. 1 in a A-A' direction, and FIG. 11 is an enlarged view of a part of a cross-sectional view of FIG. 1 in a B-B' direction.

Referring to FIG. 10, the adhesive member 190 in the embodiment may be applied between an outer surface of the lens barrel 120 and an inner surface of the bobbin 132. At this time, the outer surface of the lens barrel 120 includes a first flange portion 122 and a first step portion 125.

In addition, the inner surface of the bobbin 132 includes an inner portion 132-3 facing the outer surface of the first flange portion 122 and the first step portion 125. At this time, in the embodiment, when the adhesive member 190 is applied between the first flange portion 122 and the first step portion 125 of the lens barrel 120 and the inner portion 132-3 of the bobbin 132, the adhesive member 190 can be divided into a first step in which the adhesive member 190 completely exposes the first step portion 125 (when applied only to an uppermost end of the first flange portion), a second step in which the adhesive member 190 is applied to the first portion 125-1 of the first step portion 125, a third step in which the adhesive member 190 is applied to the second portion 125-2 of the first step portion 125, and a fourth step in which the adhesive member 190 is applied to the third portion 125-3 of the first step portion 125. Through this, in the embodiment, during the process of applying the adhesive member 190, the application amount of the adhesive member 190 can be easily checked depending on whether the outer surface of each step portion of the first step portion 125 is exposed, and accordingly, the application amount of the adhesive member 190 can be easily adjusted.

Furthermore, in the embodiment, in case the adhesive member 190 is applied excessively and overflows into the lens driving device 130, or in case the application amount of the adhesive member 190 needs to be additionally adjusted, a second step portion 132-5 is formed at the bobbin 132.

Meanwhile, referring to FIG. 11, in the embodiment, the coupling of the lens barrel 120 and the bobbin 132 can be proceed by applying the adhesive member 190 while placing the lens barrel 120 at a certain position within the hollow portion of the bobbin 132 using a coupling jig (not shown). At this time, a certain air gap exists between the outer surface of the lens barrel 120 and the inner surface of the bobbin 132, and the adhesive member 190 can be applied between the air gap.

At this time, the protruding portion 122-1 of the first flange portion 122 of the lens barrel 120 and the depression 132-4 of the bobbin 132 can actually be in direct contact with each other, but in the embodiment, an air gap of a certain space exists between the protruding portion 122-1 and the depression 132-4.

Accordingly, the adhesive member 190 can be applied to surround the upper surface, outer surface, and lower surface of the protruding portion 122-1 of the lens barrel 120. Through this, in the embodiment, a contact area between the adhesive member 190 and the lens barrel 120 can be increased, and accordingly, the coupling strength between the lens barrel 120 and the bobbin 132 can be improved.

Meanwhile, in the drawing, an air gap also exists in a region (A) between the second flange portion 132-2 of the bobbin 132 and the lower end portion 123 of the lens barrel 120, and the adhesive member 190 can also be applied to the region (A).

At this time, the first coupling portion 126 and the second coupling portion 135 can be disposed on each of the protruding portion 122-1 and the depression 132-4. Accordingly, the lens barrel 120 and the bobbin 132 can be mutually coupled before the adhesive member 190 is applied. In addition, the lens barrel 120 can be prevented from being rotated from the bobbin 132 by stress generated in the process of applying and/or curing the adhesive member 190.

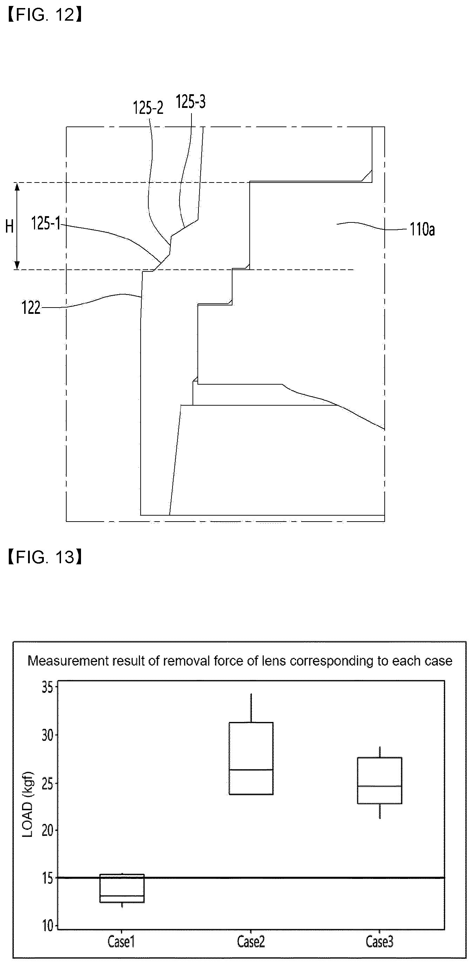

FIG. 12 is a view for explaining a relationship between a first step portion of a lens barrel and a lens according to an embodiment.

Referring to FIG. 12, the lens barrel 120 includes a first step portion 125 having steps according to different inclination angles.

At this time, an outer surface of the conventional lens barrel may also have multiple steps. However, the steps of the lens barrel in the conventional technology are not used for checking and controlling the application amount of adhesive member 190 as in the embodiment, but are determined by a thickness of the lens accommodated inside the lens barrel.

For example, the steps of the outer surface of the conventional lens barrel are determined by the thickness of the plurality of lenses accommodated inside the lens barrel. For example, the steps of the outer surface of the conventional lens barrel are formed to correspond to a plurality of lenses accommodated within the lens barrel. For example, when the lenses include a first lens, a second lens, and a third lens, the outer surface of the conventional lens barrel has a first step overlapping the first lens in a direction perpendicular to the optical axis, a second step overlapping the second lens in a direction perpendicular to the optical axis, and a third step overlapping the third lens in a direction perpendicular to the optical axis.

Unlike this, the first step portion 125 of the lens barrel 120 in the embodiment is formed to check and control the application amount of adhesive member 190, regardless of the lens 110 accommodated within the lens barrel 120.

Accordingly, the lens 110 accommodated within the lens barrel 120 in the embodiment may include the first lens 110a. In addition, in the embodiment, at least a portion of each of the first portion 125-1, the second portion 125-2, and the third portion 125-3 of the first step portion 125 of the lens barrel 120 may overlap with the first lens 110a in a direction perpendicular to the optical axis. For example, in a general lens barrel, only one step portion may be formed in a region (H) that overlaps with one lens in a direction perpendicular to the optical axis, but in the embodiment, a plurality of step portions are formed in a region (H) that overlaps with one lens in a direction perpendicular to the optical axis.

FIG. 13 is a view showing a coupling force between a lens barrel and a bobbin according to an amount of an adhesive member applied according to an embodiment.

Case 1 in FIG. 13 shows a case where the adhesive member 190 is applied up to the first portion 125-1 of the first step portion 125 of the lens barrel 120, case 2 shows a case where the adhesive member 190 is applied up to the second portion 125-2 of the first step portion 125 of the lens barrel 120, and case 3 shows a case where the adhesive member 190 is applied up to the third portion 125-3 of the first step portion 125 of the lens barrel 120.

At this time, a measurement result of the removal force of case 1 was lower than a standard value of 15 kgf, and it was confirmed that measurement results the removal force of cases 2 and 3 were higher than the standard value. Furthermore, it was confirmed that case 2 had a higher removal force value than case 3.

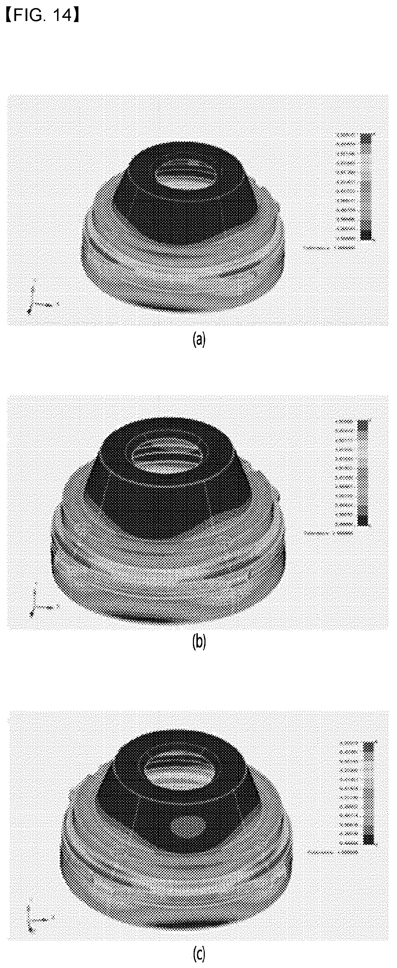

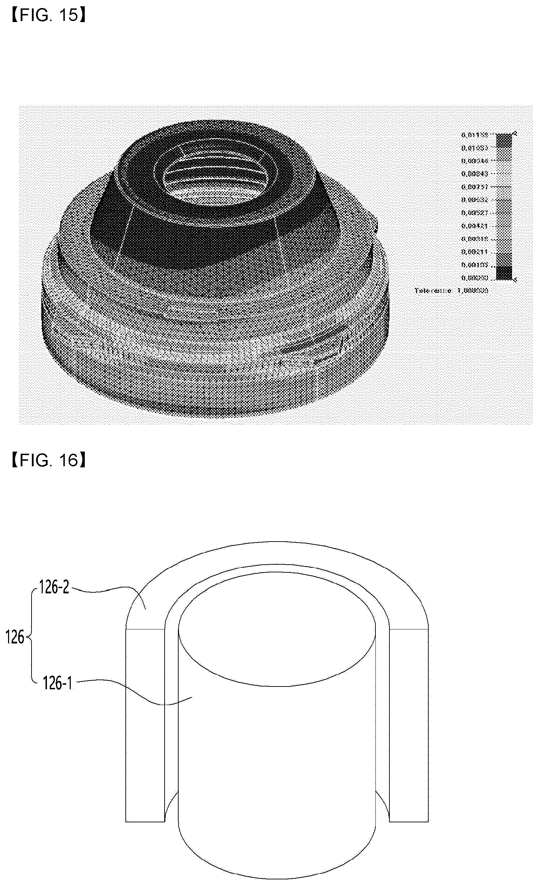

FIG. 14 and FIG. 15 are views showing a degree of deformation of a lens barrel according to an amount of an adhesive member applied according to an embodiment.

FIG. 14 (a) shows a degree of deformation of the lens barrel (lens unaccommodated state) during a curing process corresponding to case 1 of FIG. 13, FIG. 14 (b) shows a degree of deformation of the lens barrel (lens unaccommodated state) during a curing process corresponding to case 2 of FIG. 13, and FIG. 14 (c) shows a degree of deformation of the lens barrel (lens unaccommodated state) during a curing process corresponding to case 3 of FIG. 13.

As shown in FIG. 14 (a) to (c), it was confirmed that the degree of deformation of the lens barrel was approximately 0.02672 mm for case 1, approximately 0.02660 mm for case 2, and approximately 0.02619 mm for case 3, and accordingly, it was confirmed that the degree of deformation of the lens barrel was almost non-existent when applying the adhesive member corresponding to cases 1 to 3.

In addition, FIG. 15 shows a degree of deformation of the lens barrel when the adhesive member 190 corresponding to case 2 is applied while the lens is accommodated in the lens barrel. As shown in FIG. 15, it was confirmed that the degree of deformation of the lens barrel is further reduced when the lens 110 is accommodated in the lens barrel 120.

In the case of the product specifications of the camera module of the embodiment, the adhesive member 190 can be applied to correspond to case 2 where the degree of deformation of the lens barrel is low while the detachment force is above a certain level. Accordingly, in the embodiment, in the process of applying the adhesive member 190, the adhesive member 190 can be applied to a height where the outer surface of the second portion 125-2 of the first step portion 125 of the lens barrel 120 is completely covered by the adhesive member 190, while the outer surface of the third portion 125-3 is completely exposed.

For example, the adhesive member 190 in the embodiment may be formed to cover the outer surface of the first portion 125-1 of the first step portion 125 and the outer surface of the second portion 125-2 of the first step portion 125, while exposing the outer surface of the third portion 125-3. For example, the adhesive member 190 may be applied only to an upper end of the second portion 125-2 of the first step portion 125 of the lens barrel 120, thereby minimizing deformation of the lens barrel or change in resolution of the lens while having an optimal coupling force.

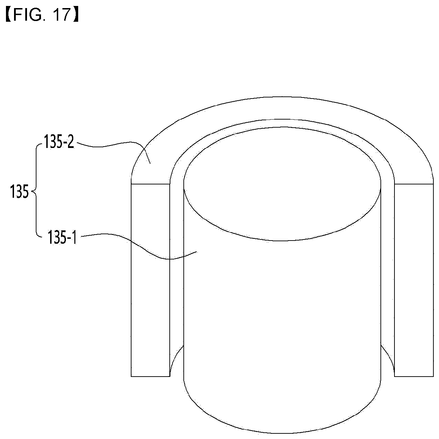

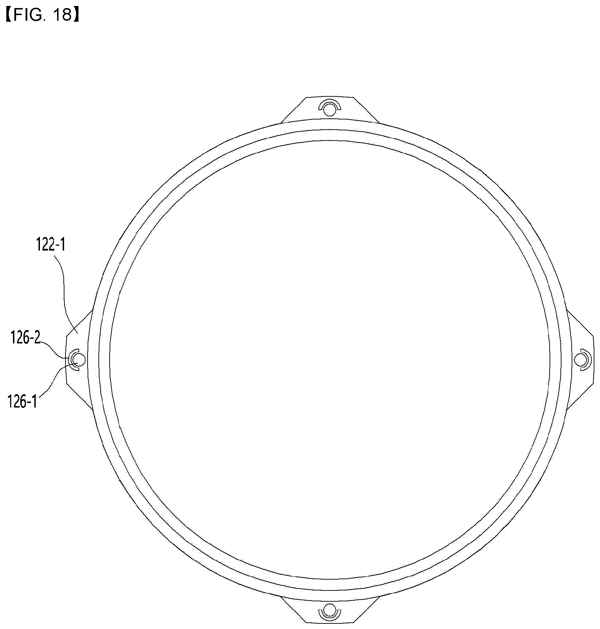

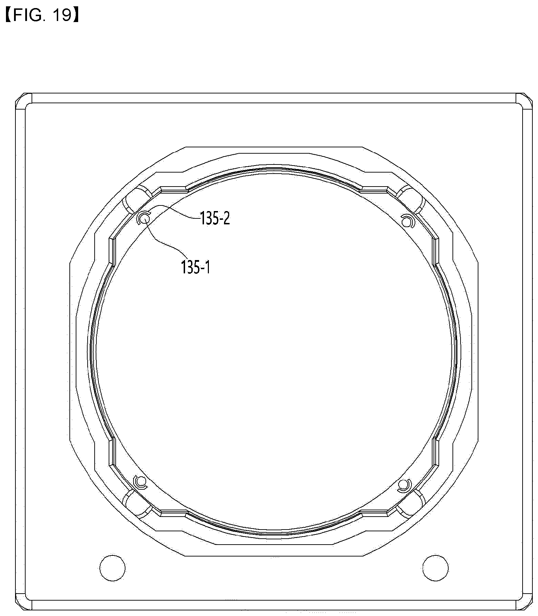

FIG. 16 to 19 are plan views showing modification examples of the first coupling portion, the second coupling portion, the lens barrel, and the bobbin according to a first embodiment.

Referring to FIGS. 16 to 19, each of the first coupling portion 126 and the second coupling portion 135 may further include a member that prevents magnetic interference.

For example, the first coupling portion 126 may include a first magnet 126-1. The first magnet 126-1 may correspond to the first coupling portion 126 of the first embodiment.

The first coupling portion 126 may include a first yoke 126-2 disposed adjacent to the first magnet 126-1. The first yoke 126-2 may be spaced apart from the first magnet 126-1 by a predetermined distance. The first yoke 126-2 may be provided to surround at least a portion of the outer surface of the first magnet 126-1.

Preferably, the first yoke 126-2 may be provided to surround at least a portion of the outer surface of the first magnet 126-1 at a position spaced apart from the first magnet 126-1.

Specifically, the lens driving device 130 may include a driving unit. The driving unit may provide a driving force for moving the lens barrel 120 with respect to the bobbin 132. For example, the driving unit may include a coil and a driving magnet. At this time, the driving magnet interacts with the coil to generate a driving force for moving the lens barrel 120 to an accurate position. At this time, if another magnetic body exists around the driving magnet, a change in the driving force may occur, and thereby the positional accuracy of the lens barrel 120 may be deteriorated.

Accordingly, the first coupling portion 126 of the embodiment may include a first magnet 126-1 and a first yoke 126-2. The first yoke 126-2 may be provided between the first magnet 126-1 and the driving magnet. Through this, magnetic interference between the first magnet 126-1 and the driving magnet may be minimized.

At this time, the first yoke 126-2 may be disposed around the outer surface of the first magnet 126-1 that faces the driving magnet. Meanwhile, the protruding portion 122-1 of the lens barrel 120 may be provided with a first insertion groove 122-1R into which the first magnet 126-1 is inserted, and an insertion groove into which the first yoke 126-2 is inserted.

Meanwhile, the second coupling portion 135 may include a second magnet 135-1 and a second yoke 135-2.

In addition, the second yoke 135-2 may be provided at a position spaced apart from the second magnet 135-1 to surround at least a portion of the outer surface of the second magnet 135-1. For example, the second yoke 135-2 may be disposed around the outer surface of the second magnet 135-1 facing the driving magnet.

Accordingly, the embodiment can prevent the driving force of the driving unit of the lens driving device 130 from changing due to the first coupling portion 126 and the second coupling portion 135. Through this, the embodiment can improve the operating characteristics of the camera module.

Hereinafter, the second embodiment will be described in detail with reference to the accompanying drawings, but the same or corresponding components as those described in a previous embodiment will be given separate reference numerals, but redundant descriptions thereof will be omitted.

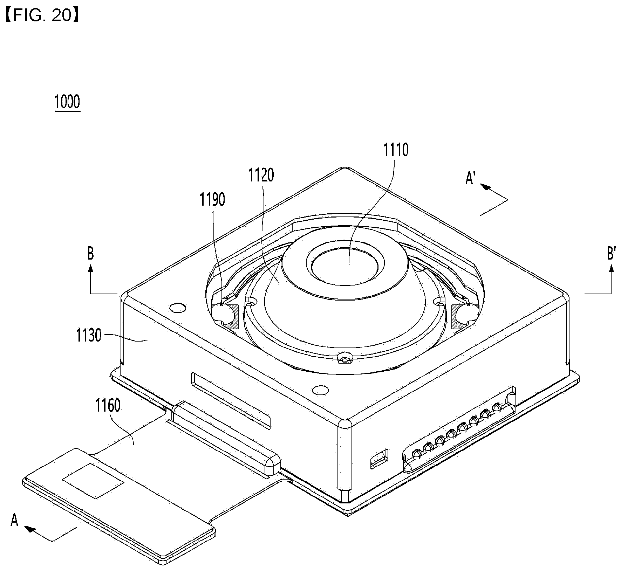

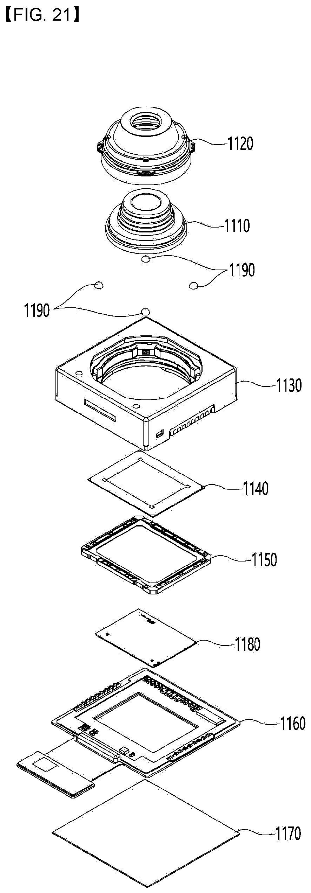

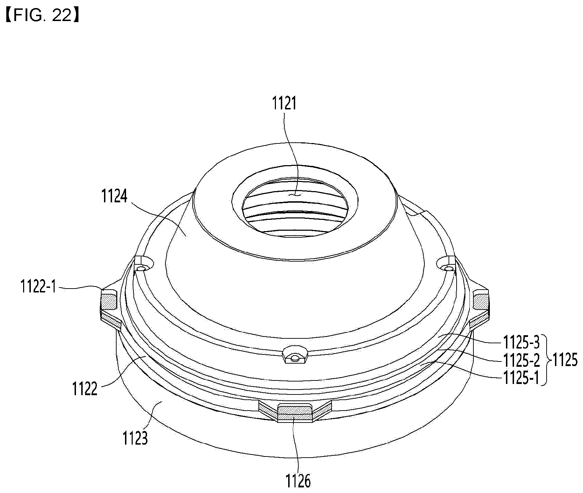

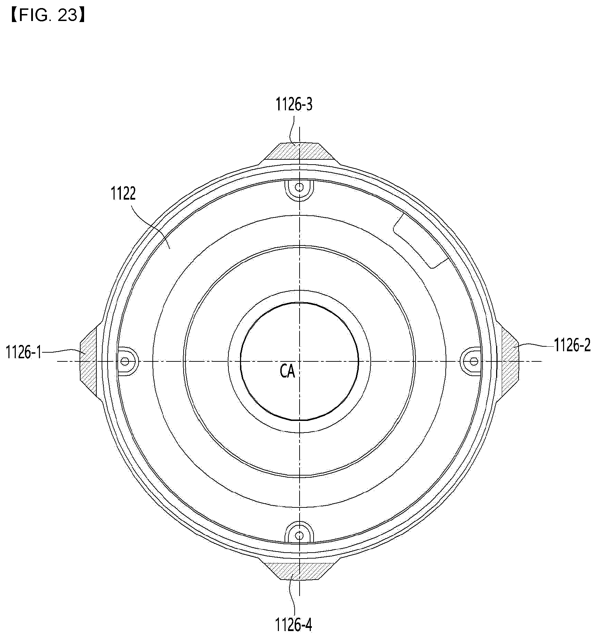

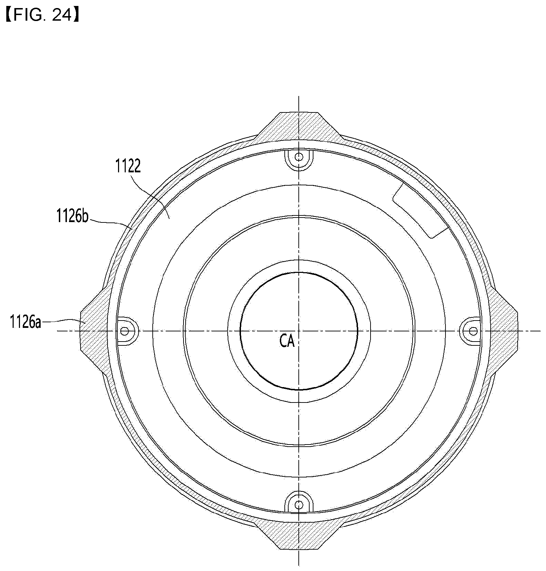

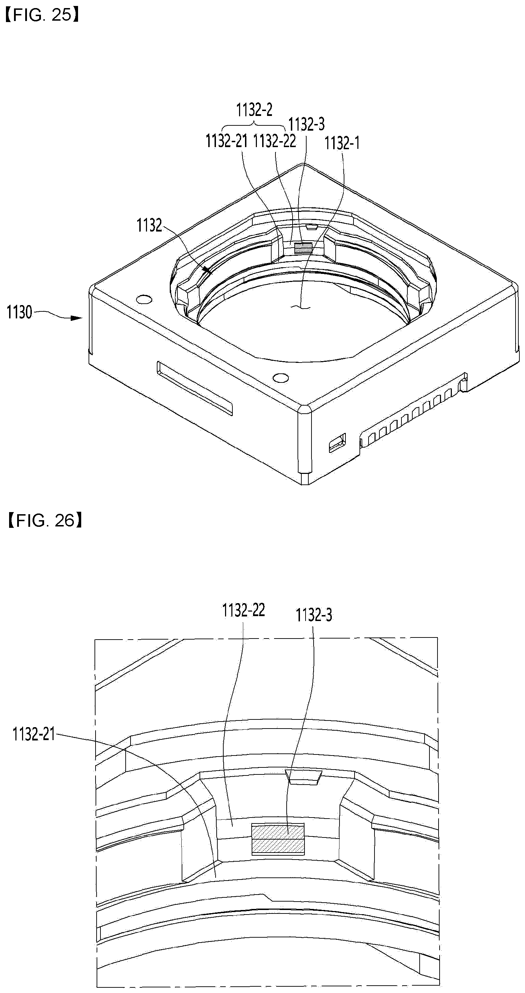

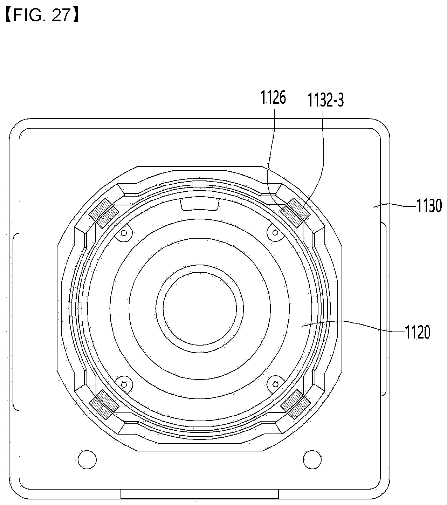

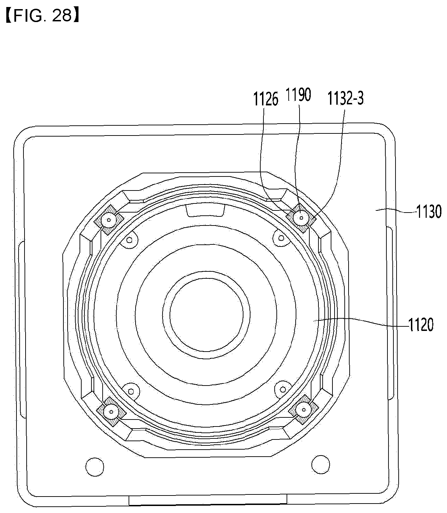

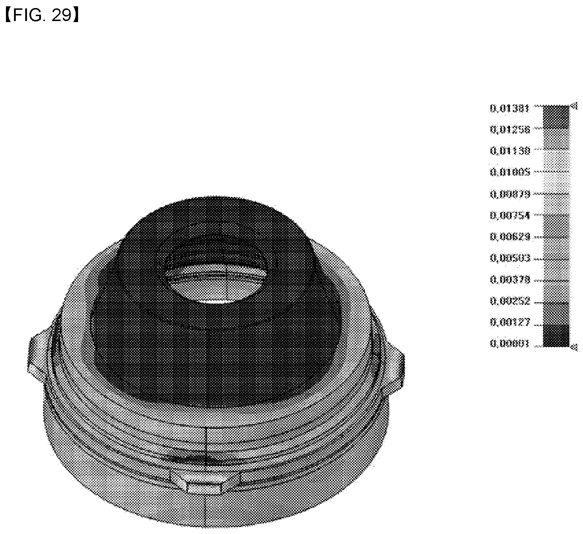

FIG. 20 is a perspective view of a camera module according to a second embodiment, FIG. 21 is an exploded perspective view of a camera module according to a second embodiment, FIG. 22 is a perspective view of a lens barrel according to a second embodiment, FIG. 23 and FIG. 24 are cross-sectional views of the lens barrel of FIG. 20 cut in a horizontal direction, FIG. 25 is a perspective view of a lens driving device according to a second embodiment, FIG. 26 is an enlarged view of an inner surface of the bobbin of FIG. 25, FIG. 27 is a view showing a state of coupling of a lens barrel and a lens driving device before a coupling member of a second embodiment is disposed, FIG. 28 is a view showing an arrangement state of an coupling member in the coupled state of FIG. 27, and FIG. 29 is a view showing a deformation of a lens barrel in an epoxy bonding method of a comparative example.

Referring to FIGS. 20 and 21, the camera module 1100 may include a lens 1110, a lens barrel 1120, a lens driving device 1130, a filter 1140, a holder 1150, a circuit board 1160, a reinforcement plate 1170, an image sensor 1180, and a coupling member 1190. In the embodiment, the lens barrel 1120 in which the lens 1110 is accommodated and the bobbin 1132 of the lens driving device 1130 may be coupled in a screwless type. Recently, since an error range of the optical axis alignment is required more rigorously with a trend of demanding high-performance camera modules, a screwless coupling method may be more efficient than a screw coupling method.

In the screwless coupling method, the lens barrel 1120 may be inserted into a hollow portion of the bobbin 1132 from an upper or lower side, and then the lens barrel 1120 may be fixed to the bobbin 1132 using an adhesive member 1190.

As will be explained later, the lens barrel 1120 of the embodiment may be an injection molded product injected by an insert injection or double injection method. In addition, the bobbin 1132 of the lens driving device 1130 may also be an injection molded product injected by an insert injection or double injection method.

Accordingly, the lens barrel 1120 may include a frame, which is a body constituting the lens barrel 1120, and a first metal member 1126 inserted into the frame.

That is, the frame of the lens barrel 1120 may be formed of an insulating material. For example, the frame of the lens barrel 1120 may be formed of resin. For example, the frame of the lens barrel 1120 may be formed of plastic. The first metal member 1126 of the lens barrel 1120 may include a different material from the frame. For example, the first metal member 1126 may include a metal material. More preferably, the first metal member 1126 may include a non-magnetic metal material.

The lens barrel 1120 of the embodiment may include a first metal member 1126 of a metal material. At least a portion of the first metal member 1126 may be exposed to the outside of the lens barrel 1120. In addition, the exposed portion of the first metal member 1126 may function as a bonding portion for bonding the lens barrel 1120 and the bobbin 1132 of the lens driving device 1130.

Furthermore, the first metal member 1126 may be inserted into the frame of the lens barrel 1120. In addition to functioning as a bonding member, the first metal member 1126 may function to improve the rigidity of the lens barrel 1120. In addition, the first metal member 1126 can prevent a change in the characteristics of the lens barrel 1120. For example, the first metal member 1126 can prevent a change in the characteristics of the lens barrel 1120 due to deformation of the lens barrel 1120 caused by various factors. Through this, the embodiment can prevent a change in dimensions of the lens barrel 1120 and solve the problem of the resolution of the camera module being reduced due to the change in the dimensions. This will be described in more detail below.

Correspondingly, the bobbin 1132 of the lens driving device 1130 can include a frame of the bobbin 1132 and a second metal member 1132-3 inserted into the frame. The second metal member 1132-3 can be inserted into the bobbin 1132. The second metal member 1132-3 can include a metal material. Preferably, the second metal member 1132-3 may include a non-magnetic metal material.

The second metal member 1132-3 may include a portion exposed to the outside of the bobbin 1132. In addition, the exposed portion of the second metal member 1132-3 may function as a bonding portion when coupled with the lens barrel 1120.

Specifically, the second metal member 1132-3 may be positioned adjacent to the first metal member 1126. Through this, the lens barrel 1120 and the bobbin 1132 of the lens driving device 1130 may be coupled to each other using the first metal member 1126 and the second metal member 1132-3.

In addition, the second metal member 1132-3 can have a function of improving the rigidity of the bobbin 1132 in addition to functioning as a bonding portion. In addition, the second metal member 1132-3 can prevent a change in the characteristics of the bobbin 1132. Through this, the embodiment can prevent deformation of the bobbin 1132. Through this, the embodiment can enable the movement of the lens barrel 1120 to a more accurate position by the lens driving device 1130. Through this, the embodiment can further improve the operating characteristics of the camera module.

Meanwhile, the lens barrel 1120 and the lens driving device 1130 can be mutually coupled by a coupling member 1190 being disposed on the first metal member 1126 and the second metal member 1132-3.

The coupling member 1190 can include a solder. That is, the lens barrel 1120 and the lens driving device 1130 can be mutually connected by the solder bonding of the embodiment.

Through this, the embodiment can prevent deformation of the lens barrel 1120 and/or the bobbin 1132 that occurs when the epoxy is cured, compared to the conventional technology using epoxy.

Referring to FIGS. 22 to 24, the lens barrel 1120 according to the embodiment can include an opening 1121 penetrating in the optical axis direction and a first flange portion 1122. In addition, a protruding portion 1122-1 can be formed in the first flange portion 1122. The lens barrel 1120 can include a first metal member 1126. The first metal member 1126 can be inserted into the lens barrel 1120. The first metal member 1126 may include a different material from the lens barrel 1120. The first metal member 1126 may include a metal material. The first metal member 1126 may provide rigidity to the lens barrel 1120. To this end, the first metal member 1126 may include a metal material having a certain rigidity. The first metal member 1126 may be used as a bonding pad for bonding the coupling member 1190 when the lens barrel 1120 and the bobbin 1132 of the lens driving device 1130 are coupled. The lens barrel 1120 and the first metal member 1126 may not be manufactured separately through separate processes and then coupled, but may be manufactured as one piece through double injection molding or insert injection molding. Briefly describing the manufacturing method thereof, the embodiment can place the first metal member 1126 in an injection mold. Then, the embodiment can manufacture the lens barrel 1120 by injecting an insulating material into the injection mold while the first metal member 1126 is disposed. Through this, the first metal member 1126 can be inserted into the lens barrel 1120.

At this time, referring to FIG. 23, the first metal member 1126 can include a plurality of metal parts separated from each other. For example, the first metal member 1126 can include a plurality of metal parts provided on each of a plurality of protruding portions 1122-1 of the lens barrel 1120. That is, the lens barrel 1120 can include a plurality of protruding portions 1122-1. For example, the lens barrel 1120 may include four protruding portions 1122-1. In addition, the first metal member 1126 may be provided in each of the four protruding portions 1122-1. For example, the first metal member 1126 may include first to fourth metal parts 1126-1, 1126-2, 1126-3, and 1126-4.

The first to fourth metal parts 1126-1, 1126-2, 1126-3, and 1126-4 may be provided in each of the four protruding portions 1122-1 of the lens barrel 1120. In addition, the first to fourth metal parts 1126-1, 1126-2, 1126-3, and 1126-4 can be separated from each other. That is, the lens barrel 1120 can be coupled with the bobbin of the lens driving device 1130 at the protruding portion 1122-1. The first metal member 1126 can be provided only at the protruding portion 1122-1 of the lens barrel 1120. Therefore, the embodiment can improve coupling processability between the lens barrel 1120 and the bobbin 1132 while minimizing a manufacturing cost.

Referring to FIG. 24, the first metal member 1126 may be provided as a single integral frame. For example, the first metal member 1126 may be provided in a ring shape along a circumference of an outer circumferential surface of the lens barrel 1120 within the lens barrel 1120. For example, the first metal member 1126 may include first metal parts 1126a disposed in four protruding portions 1122-1 of the lens barrel 1120. In addition, the first metal member 1126 may include second metal parts 1126b connecting the first metal parts 1126a disposed in the protruding portions 1122-1 to each other. Through this, the second embodiment can improve the rigidity of the lens barrel 1120 by using the first metal member 1126 that is connected to each other in a ring shape, while connecting the lens barrel 1120 and the bobbin 1132 of the lens driving device 1130.

At least a part of the first metal member 1126 can be exposed to the outer surface of the lens barrel 1120. For example, the first metal member 1126 can include a part exposed through the outer surface of the protruding portion 1122-1 of the lens barrel 1120. For example, the upper surface of the first metal member 1126 cannot contact the lens barrel 1120. In addition, at least a part of a side surface of the first metal member 1126 cannot contact the lens barrel 1120. A portion of the first metal member 1126 that does not contact the lens barrel 1120, or an exposed portion, may be used as a bonding pad for bonding the coupling member 1190 when coupled with the lens driving device 1130.

The lens barrel 1120 may include a lower end portion 1123 positioned below the first flange portion 1122 based on the first flange portion 1122, and an upper end portion 1124 positioned above the first flange portion 1122. In addition, a step portion 1125 may be formed between the first flange portion 1122 and the upper end portion 1124 of the lens barrel 1120. An outer surface of the step portion 1125 may include a first portion 1125-1 having a first inclination angle and a second portion 1125-2 having a second inclination angle different from the first inclination angle. Furthermore, the outer surface of the step portion 1125 in the embodiment may include a third portion 1125-3 having a third inclination angle different from the second inclination angle.

Referring to FIGS. 25 and 26, the lens driving device 1130 may include a bobbin 1132. The bobbin 1132 may include a hollow portion 1132-1 in which the lens barrel 1120 is accommodated therein. The bobbin 1132 may include an inner surface facing the outer surface of the lens barrel 1120.

For example, the bobbin 1132 may include a second flange portion 1132-2. The second flange portion 1132-2 may, together with the first flange portion 1122 of the lens barrel 1120, function as a stopper to limit movement of the lens barrel 1120 when the lens barrel 1120 moves downward to the maximum within the hollow portion 1132-1. The second flange portion 1132-2 may have a step. The second flange portion 1132-2 may be a depression concaved inwardly from an inner surface of the bobbin 1132.

The second flange portion 1132-2 may include a first region 1132-21 having a first height. In addition, the second flange portion 1132-2 may include a second region 1132-22 having a second height greater than the first height. The first region 1132-21 of the second flange portion 1132-2 may function as a seating portion on which the protruding portion 1122-1 of the lens barrel 1120 is seated when coupled with the lens barrel 1120.

The second region 1132-22 of the second flange portion 1132-2 may be a region on which the second metal member 1132-3 inserted into the bobbin 1132 is disposed. That is, the second metal member 1132-3 may be disposed in the second region 1132-22 of the second flange portion 1132-2. At this time, the upper surface of the second metal member 1132-3 may be exposed to the outside while being disposed on the second region 1132-22 of the second flange portion 1132-2.

The second region 1132-22 of the second flange portion 1132-2 may be a portion for adjusting a height of the first metal member 1126 disposed on the lens barrel 1120 and the second metal member 1132-3. For example, a step height between the first region 1132-21 and the second region 1132-22 of the second flange portion 1132-2 may correspond to a thickness of the protruding portion 1122-1 of the lens barrel 1120.

Accordingly, an upper surface of the second metal member 1132-3 disposed in the second region 1132-22 of the second flange portion 1132-2 may have a height corresponding to an upper surface of the first metal member 1126 provided in the protruding portion 1122-1 of the lens barrel 1120. Accordingly, the embodiment can easily perform solder bonding of the coupling member 1190 on the first metal member 1126 and the second metal member 1132-3. Accordingly, the embodiment can improve the processability.

Referring to FIG. 27, the embodiment can insert the lens barrel 1120 into the hollow portion of the bobbin 1132 of the lens driving device 1130. At this time, when the lens barrel 1120 is inserted into the hollow portion of the bobbin 1132, a lower surface of the protruding portion 1122-1 of the lens barrel 1120 can be seated on the first region 1132-21 of the second flange portion 1132-2 of the bobbin 1132. When the protruding portion 1122-1 of the lens barrel 1120 is seated on the first region 1132-21 of the second flange portion 1132-2 of the bobbin 1132, the metal member 1126 provided on the lens barrel 1120 and the second metal member 1132-3 provided on the second region 1132-22 of the second flange portion 1132-2 of the bobbin 1132 can be aligned substantially on the same plane. For example, at least a portion of the first metal member 1126 provided on the lens barrel 1120 can overlap with the second metal member 1132-3 provided on the bobbin 1132 in a horizontal direction perpendicular to the optical axis direction.

Referring to FIG. 28, the embodiment can apply a coupling member 1190 on the first metal member 1126 and the second metal member 1132-3 while the first metal member 1126 and the second metal member 1132-3 are aligned. Specifically, a solder can be disposed on the first metal member 1126 and the second metal member 1132-3. Through this, the embodiment can utilize the first metal member 1126 and the second metal member 1132-3 as bonding pads for bonding the solder. Furthermore, the embodiment can couple the lens barrel 1120 and the bobbin 1132 of the lens driving device 1130 to each other using a solder bonding method.

At this time, referring to FIG. 29, when coupling the lens barrel and the bobbin using the epoxy of the comparative example, the characteristics of the lens barrel may change due to the contraction and expansion that occurs during the curing of the epoxy. Specifically, in the comparative example, it was confirmed that a numerical change of about 1.27 µm occurred in a portion corresponding to the protruding portion of the lens barrel. In addition, in the comparative example, it was confirmed that a numerical change of about 7.54 µm occurred in a lower portion of the protruding portion of the lens barrel. In addition, when the numerical change of the lens barrel occurs, the resolution of the lens is deteriorated accordingly, and there is a problem that the overall operating characteristics of the camera module are deteriorated.

Unlike this, the embodiment may couple the lens barrel 1120 and the bobbin 1132 of the lens driving device 1130 using a solder bonding method. Through this, the embodiment may prevent deformation of the lens barrel 1120.

The embodiment may couple the lens barrel and the lens driving device using a solder bonding method. Specifically, the lens barrel of the embodiment may include a first metal member. In addition, the bobbin of the lens driving device may include a second metal member corresponding to the first metal member. The first and second metal members may be used as bonding pads for bonding a coupling member such as solder. The embodiment may form the coupling member by performing bonding on the first and second metal members using the solder. Accordingly, the embodiment may minimize characteristic changes that occur when the lens barrel and the lens driving device are coupled.

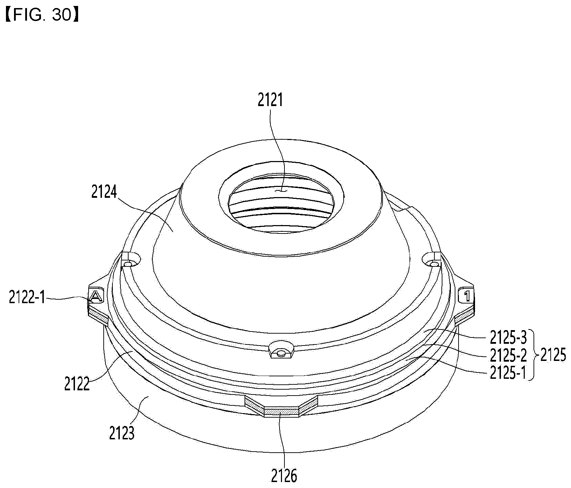

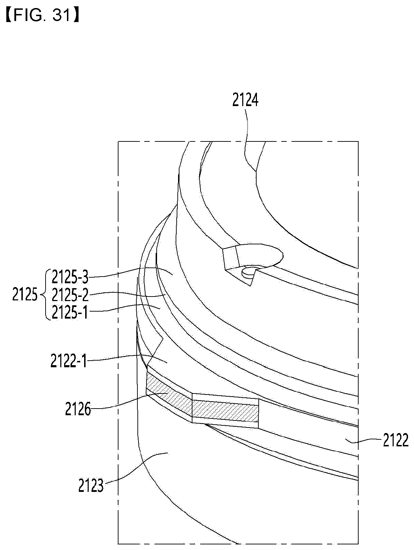

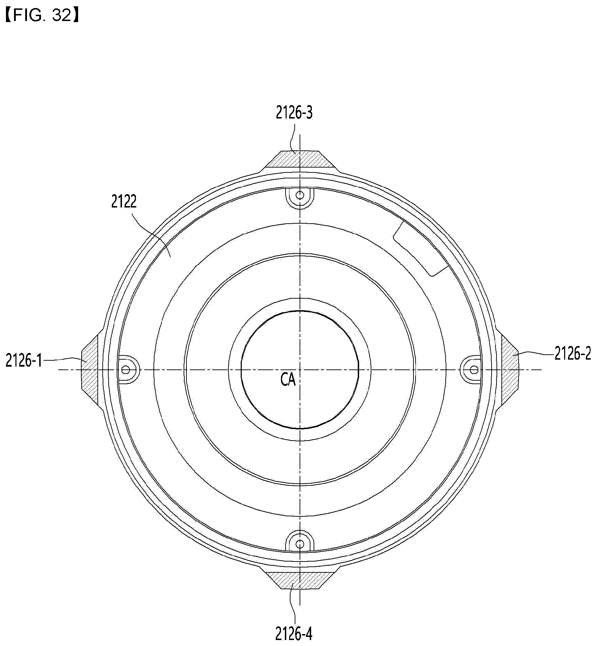

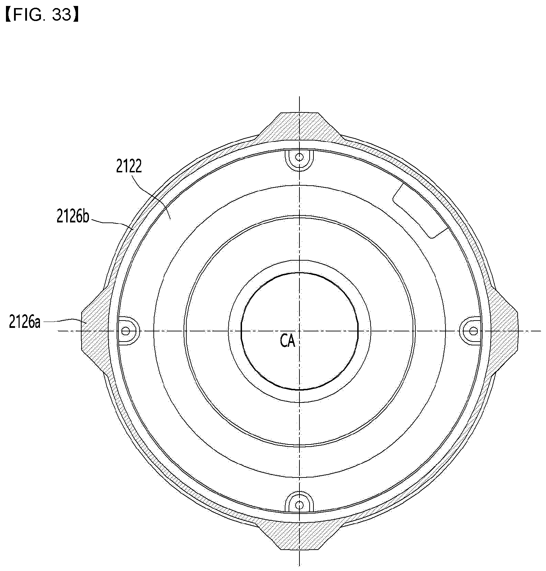

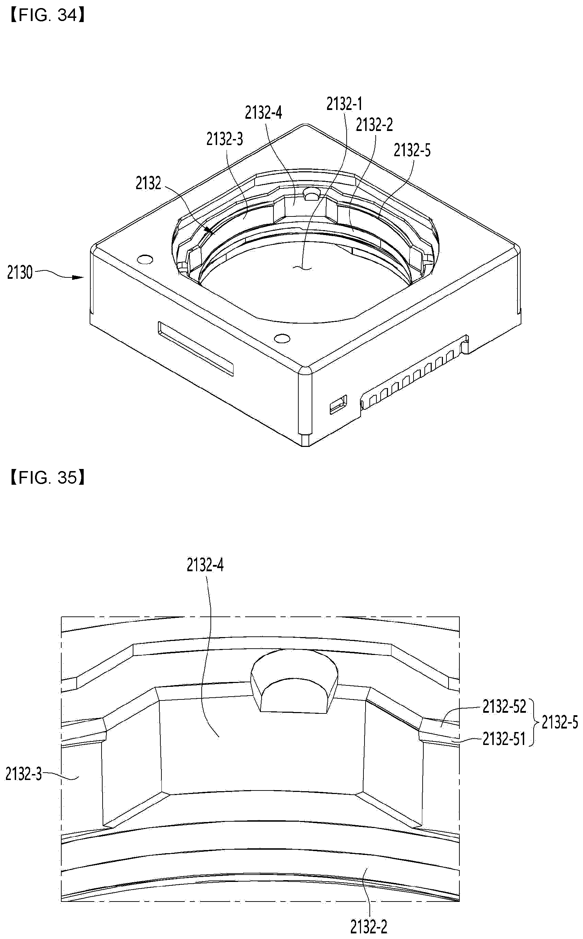

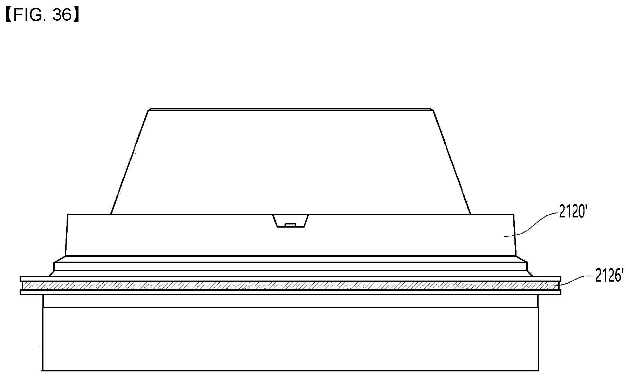

FIG. 30 is a perspective view of a lens barrel according to a third embodiment, FIG. 31 is an enlarged view of an outer surface of the lens barrel of FIG. 30, FIGS. 32 and 33 are cross-sectional views of a lens barrel of a third embodiment cut in a horizontal direction, FIG. 34 is a perspective view of a lens driving device according to a third embodiment, FIG. 35 is an enlarged view of an inner surface of the bobbin of FIG. 34, and FIG. 36 is a view showing a modification example of a lens barrel and a reinforcement frame according to a third embodiment.

Hereinafter, the third embodiment will be described in detail with reference to the accompanying drawings, but the same or corresponding components as those described in a previous embodiment will be given separate reference numerals, but redundant descriptions thereof will be omitted.

The lens barrel 2120 of the third embodiment may include a reinforcing member made of a metal material. In addition, the reinforcing member made of the metal material may be inserted into the frame of the lens barrel 2120. The reinforcing member may have a function of improving the rigidity of the lens barrel 2120. In addition, the reinforcing member can prevent a change in the characteristics of the lens barrel 2120. For example, the reinforcing member can prevent a change in the characteristics of the lens barrel 2120 due to contraction and expansion that occur during the curing of the adhesive member 2190. Accordingly, the embodiment can prevent a change in dimensions of the lens barrel 2120 and solve the problem of a resolution of the camera module being reduced due to the change in the dimensions.

A basic structure of the lens barrel 2120 according to the third embodiment corresponds to the lens barrel 120 of the first embodiment, and accordingly, duplicating descriptions thereof are omitted.

Referring to FIGS. 30 to 33, the lens barrel 2120 of the third embodiment may include a reinforcement frame 2126. The reinforcement frame 2126 may be inserted into the lens barrel 2120. The reinforcement frame 2126 may include a different material from the lens barrel 2120. The reinforcement frame 2126 may include a metal material. The reinforcement frame 2126 may provide rigidity to the lens barrel 2120. To this end, the reinforcement frame 2126 may include a metal material having a certain rigidity. The lens barrel 2120 and the reinforcement frame 2126 may not be manufactured and then coupled through separate processes, but may be manufactured integrally through double injection or insert injection. That is, the embodiment may place the reinforcement frame 2126 in an injection mold. In addition, the embodiment may manufacture the lens barrel 2120 by injecting an insulating material into the injection mold while the reinforcement frame 2126 is disposed. Through this, the reinforcement frame 2126 may be inserted into the lens barrel 2120.

The reinforcement frame 2126 may include a plurality of reinforcement parts that are separated from each other. For example, the reinforcement frame 2126 may include a plurality of reinforcement parts provided in each of a plurality of protruding portions 2122-1 of the lens barrel 2120.

That is, the lens barrel 2120 may include a plurality of protruding portions 2122-1. For example, the lens barrel 2120 may include four protruding portions 2122-1. The reinforcement frame 2126 may be provided in each of the four protruding portions 2122-1. For example, the reinforcement frame 2126 may include first to fourth reinforcement parts 2126-1, 2126-2, 2126-3, and 2126-4.

The first to fourth reinforcement parts 2126-1, 2126-2, 2126-3, and 2126-4 may be provided in each of the four protruding portions 2122-1 of the lens barrel 2120. In addition, the first to fourth reinforcement parts 2126-1, 2126-2, 2126-3, and 2126-4 may be separated from each other.

That is, the lens barrel 2120 may be coupled with the bobbin of the lens driving device 2130 at the protruding portion 2122-1. In addition, when the lens barrel 2120 and the lens driving device 2130 are coupled, a characteristic change may occur intensively at the protruding portion 2122-1. Therefore, the reinforcement frame 2126 of the first embodiment can be provided only on the protruding portion 2122-1 of the lens barrel 2120. Therefore, the embodiment can maximize the rigidity of the lens barrel 2120 while minimizing a manufacturing cost. The reinforcement frame 2126 can be provided as a single integral frame. For example, the reinforcement frame 2126 can be provided in a ring shape along a circumference of an outer circumferential surface of the lens barrel 2120 within the lens barrel 2120.

For example, the reinforcement frame 2126 can include a first reinforcement part 2126a disposed on four protruding portions 2122-1 of the lens barrel 2120. In addition, the reinforcement frame 2126 may include a second reinforcement part 2126b connecting the first reinforcement part 2126a disposed on the protruding portion 2122-1 to each other. Through this, the rigidity of the lens barrel 2120 can be further improved by using the reinforcement frame 2126 that is connected to each other in a ring shape.

At least a part of the reinforcement frame 2126 may be exposed to an outer surface of the lens barrel 2120. For example, the reinforcement frame 2126 may include a part exposed through the outer surface of the protruding portion 2122-1 of the lens barrel 2120.

For example, a side surface of the reinforcement frame 2126 may not be in contact with the lens barrel 2120. In addition, an upper surface and a side surface of the reinforcement frame 2126 may be in contact with the lens barrel 2120 and be fixed to the lens barrel 2120.

Accordingly, at least a part of the adhesive member 2190 applied to couple the lens driving device 2130 and the lens barrel 2120 may be in contact with the reinforcement frame 2126. In addition, the adhesive member 2190 may have a higher adhesive strength to the reinforcement frame 2126 of a metal material than the lens barrel 2120 of the insulating material or the bobbin of the lens driving device 2130 of the insulating material. Accordingly, the embodiment may further increase the coupling strength between the lens barrel 2120 and the lens driving device 2130.

Furthermore, the embodiment may improve heat dissipation characteristics as the adhesive member 2190 is in contact with the reinforcement frame 2126 of the lens barrel 2120. For example, the reinforcement frame 2126 may have a function of transmitting heat generated in the lens barrel 2120 in addition to the function of improving the rigidity of the lens barrel 2120. Accordingly, the adhesive member 2190 may dissipates heat transmitted through the reinforcement frame 2126 to an outside. Through this, the embodiment may increase the heat dissipation characteristics of the camera module and improve the operational reliability of the camera module.

Referring to FIG. 34 and FIG. 35, the lens driving device 2130 may include a bobbin 2132. The bobbin 2132 may include a hollow portion 2132-1 in which the lens barrel 2120 is received therein. The bobbin 2132 may include a second flange portion 2132-2. The bobbin 2132 may include an inner portion 2132-3 provided on the second flange portion 2132-2.

The inner portion 2132-3 of the bobbin 2132 may include a depression 2132-4 corresponding to the protruding portion 2122-1 formed at the first flange portion 2122 of the lens barrel 2120. In addition, the depression 2132-4 may come into contact with the protruding portion 2122-1 of the lens barrel 2120 to limit the downward movement of the lens barrel 2120 when the lens barrel 2120 moves downward to the maximum within the hollow portion of the bobbin 2132. The inner portion 2132-3 of the bobbin 2132 may face the first step portion 2125 of the lens barrel 2120. A step may not be formed in a region of the inner portion 2132-3 of the bobbin 2132 that faces the first step portion 2125 of the lens barrel 2120. However, the depression 2132-4 is formed in one region of the inner portion 2132-3, and accordingly, a region in which the step is not formed in the inner portion 2132-3 may refer to a region excluding the region in which the depression 2132-4 is formed. The bobbin 2132 may include a second step portion 2132-5 formed on the inner portion 2132-3.

The second step portion 2132-5 may enable check and control of the amount of adhesive member 2190 applied between the lens barrel 2120 and the bobbin 2132. For example, the lens barrel 2120 includes a first step portion 2125 divided into three step portions. Through this, in the embodiment, the application amount and confirmation of the adhesive member 2190 may be performed in three steps based on the three step portions. However, depending on the product specifications, the amount of application and confirmation of the adhesive member 2190 may need to be performed in four or more steps.

Accordingly, in the embodiment, the second step portion 2132-5 is formed at the bobbin 2132. For example, the second step portion 2132-5 includes a first portion 2132-51 having a step from the inner portion 2132-3 and a second portion 2132-52 having a step from the first portion 2132-51. At this time, the first portion 2132-51 of the second step portion 2132-5 may be positioned higher than the first step portion 2125 formed on the lens barrel 2120. For example, a lowermost end of the first portion 2132-51 of the second step portion 2132-5 may be positioned higher than an uppermost end of the third portion 2125-3 of the first step portion 2125 of the lens barrel 2120. To this end, it is possible to additionally check the application amount and confirmation of the adhesive member through the first portion 2132-51 of the second step portion 2132-5.

Furthermore, if a part of the adhesive member 2190 flows into the inside of the lens driving device 2130 due to an error in the control of the amount of application of the adhesive member 2190, normal operation of the lens barrel 2120 may be impossible. The second step portion 2132-5 of the bobbin 2132 includes a plurality of step portions, thereby enabling the application amount of the adhesive member 2190 to be confirmed and adjusted and preventing the adhesive member 2190 from overflowing into the lens driving device 2130.

In addition, referring to FIG. 36, in another embodiment, the lens barrel 2120 may be provided with a receiving groove that is concaved inwardly in the outer surface. The receiving groove may be provided along the circumference of the outer surface of the lens barrel 2120 on the outer surface of the lens barrel 2120.

In addition, the reinforcement frame 2126 may be provided within the receiving groove. Through this, the outer surface of the reinforcement frame 2126 may be entirely exposed along the circumference direction of the outer surface of the lens barrel 2120.

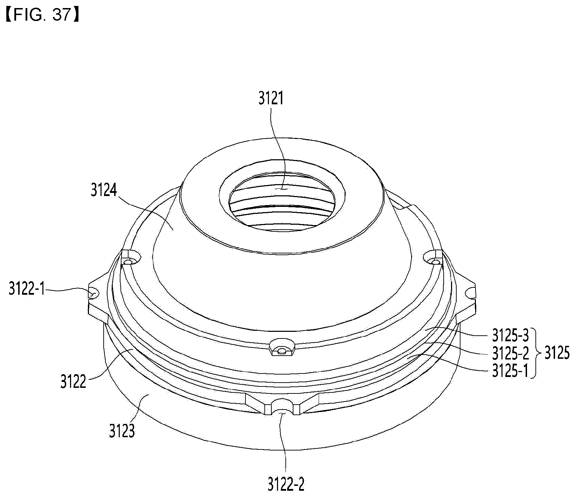

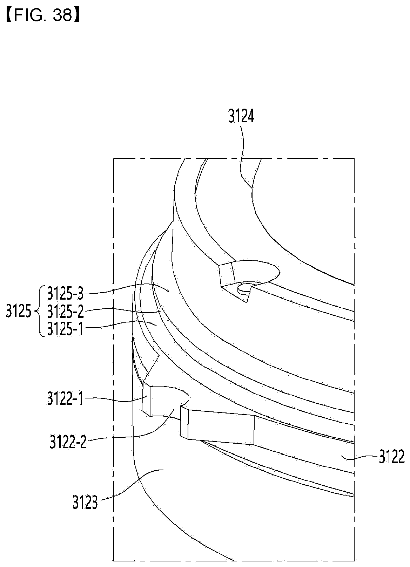

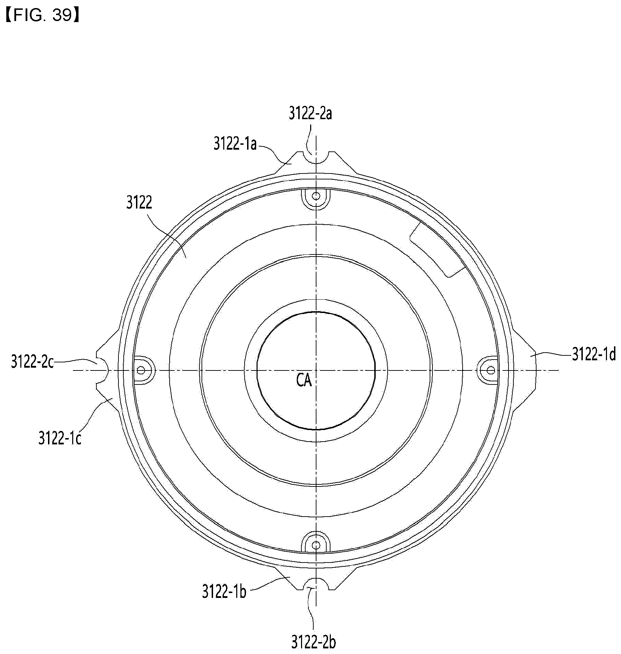

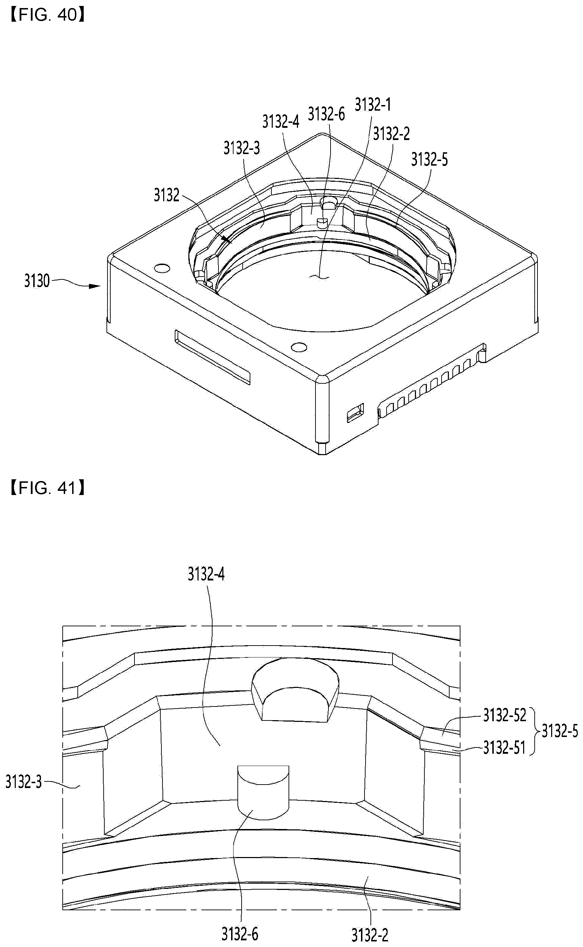

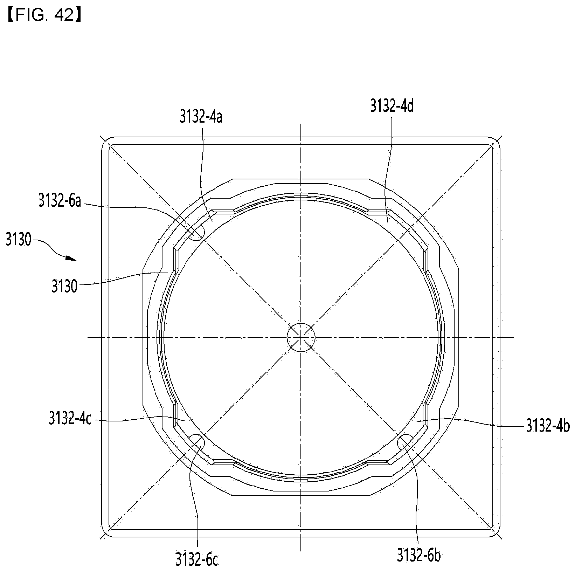

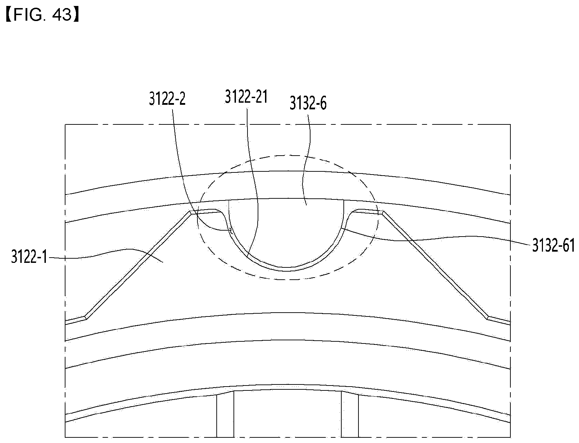

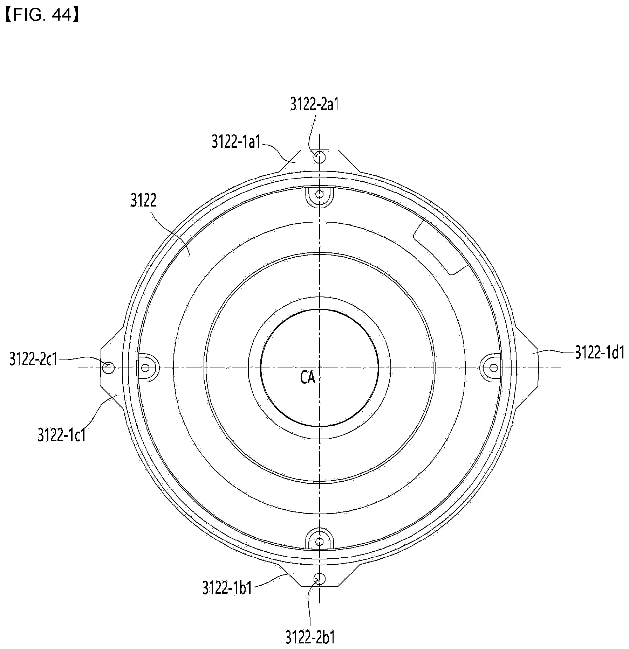

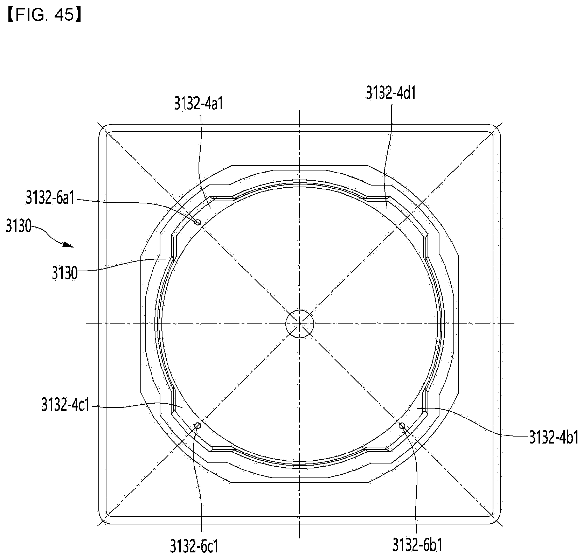

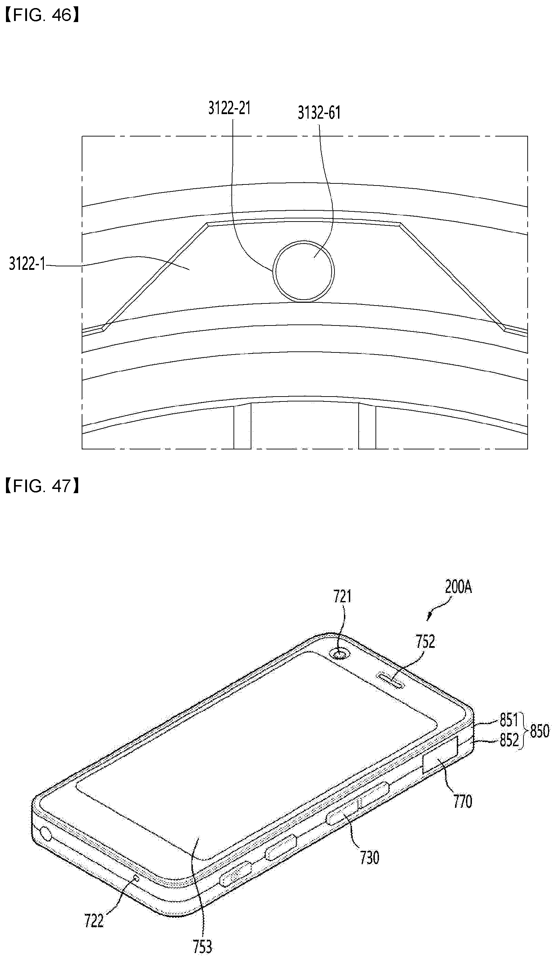

FIG. 37 is a perspective view of a lens barrel according to a fourth embodiment, FIG. 38 is an enlarged view of an outer surface of the lens barrel of FIG. 37, FIG. 39 is a plan view of a lens barrel according to a fourth embodiment, FIG. 40 is a perspective view of a lens driving device according to a fourth embodiment, FIG. 41 is an enlarged view of an inner surface of the bobbin of FIG. 40, FIG. 42 is a plan view of a lens driving device according to a fourth embodiment, FIG. 43 is a coupling diagram of a lens barrel and a bobbin according to a fourth embodiment, FIG. 44 is a plan view showing a modification example of a lens barrel according to a fourth embodiment, FIG. 45 is a plan view showing a modification example of a bobbin of a lens driving device according to a fourth embodiment, and FIG. 46 is a coupling diagram of a lens barrel and a bobbin of a lens driving device according to FIGS. 44 and 45.

Hereinafter, the fourth embodiment will be described in detail with reference to the accompanying drawings, but the same or corresponding components as those described in a previous embodiment will be given separate reference numerals, but redundant descriptions thereof will be omitted.

At this time, the lens barrel 3120 may include a first coupling portion 3122-2. In addition, the bobbin 3132 may include a second coupling portion 3132-6 corresponding to the first coupling portion 3122-2. The first coupling portion 3122-2 may be a through hole provided in the lens barrel 3120, and the second coupling portion 3132-6 may be a protrusion provided in the bobbin 3132 and corresponding to the through hole. However, the embodiment is not limited thereto. The first coupling portion 3122-2 may be a protrusion, and the second coupling portion 3132-6 may be a through hole. In addition, the through hole may be provided in a recess shape into which the protrusion is to be inserted. In addition, the coupling of the lens barrel 3120 and the bobbin 3132 may be performed using the first coupling portion 3122-2 and the second coupling portion 3132-6. Through this, the embodiment can easily determine a coupling position of the lens barrel 3120 and the bobbin 3132, and further improve the accuracy of the coupling position. In addition, the embodiment can solve the problem of the lens barrel 3120 being rotated within the bobbin 3132 by the adhesive member 3190 disposed between the lens barrel 3120 and the bobbin 3132. For example, the lens barrel 3120 may be rotated within the bobbin 3132 before the adhesive member 3190 is applied or during a curing process after the adhesive member 3190 is applied. At this time, since the embodiment is in a state where the lens barrel 3120 and the bobbin 3132 are coupled using the first coupling portion 3122-2 and the second coupling portion 3132-6, the rotation problem in the process of applying the adhesive member 3190 can be solved. Accordingly, the embodiment can improve the accuracy of the coupling position between the lens barrel 3120 and the bobbin 3132, thereby improving the resolution, and thereby improving the operating characteristics of the camera module.

Meanwhile, the bobbin 3132 and the lens barrel 3120 can be firmly fixed by applying an adhesive member 3190 between the inner surface of the bobbin 3132 and the outer surface of the lens barrel 3120 while the lens barrel 3120 is coupled to the bobbin 3132 by the first coupling portion 3122-2 and the second coupling portion 3132-6.

Referring to FIGS. 37 to 39, the lens barrel 3120 can include an opening 3121 and a first flange portion 3122. A protruding portion 3122-1 can be formed on the first flange portion 3122 of the lens barrel 3120.

A first coupling portion 3122-2 can be provided in the plurality of protruding portions 3122-1. Preferably, the first coupling portion 3122-2 may be provided in each of the plurality of protruding portions 3122-1. At this time, the plurality of protruding portions 3122-1 may be four, and accordingly, the first coupling portions 3122-2 may also be four. However, the embodiment is not limited thereto. For example, the embodiment may provide the first coupling portion 3122-2 only in two protruding portions 3122-1 facing each other based on the optical axis.

For example, the plurality of protruding portions 3122-1 may include first to fourth protruding portions 3122-1a, 3122-1b, 3122-1c, and 3122-1d. The first coupling portion 3122-2 may be provided in at least two protruding portions among the first to fourth protruding portions 3122-1a, 3122-1b, 3122-1c, and 3122-1d. For example, the first coupling portion 3122-2 may be provided in the first to third protruding portions 3122-1a, 3122-1b, and 3122-1c among the first to fourth protruding portions 3122-1a, 3122-1b, 3122-1c, and 3122-1d, and the fourth protruding portion 3122-1d may not have the first coupling portion. The first coupling portion 3122-2 may be formed to be concave inwardly from the outer surface of the protruding portion 3122-1. The first coupling portion 3122-2 may be a through hole penetrating the protruding portion 3122-1. The first coupling portion 3122-2 may be connected to the outer surface of the protruding portion 3122-1.

The first coupling portion 3122-2 may have a shape and size corresponding to the second coupling portion 3132-6 provided in the bobbin 3132. Preferably, the first coupling portion 3122-2 may have a smaller radius of curvature than a radius of curvature of the second coupling portion 3132-6. The radius of curvature of the first coupling portion 3122-2 may refer to a radius of curvature of the inner surface of the first coupling portion 3122-2. Accordingly, a curvature of the inner surface of the first coupling portion 3122-2 may be greater than a curvature of the outer surface of the second coupling portion 3132-6. Accordingly, the lens barrel 3120 may be rotated within a certain angle with respect to the bobbin 3132 while the first coupling portion 3122-2 is inserted into the second coupling portion 3132-6. At this time, the embodiment manages the rotation within 1 degree. Accordingly, a difference value between the radius of curvature or curvature of the first coupling portion 3122-2 and the radius of curvature or curvature of the second coupling portion 3132-6 may be a value for managing the rotation of the lens barrel 3120 in the bobbin 3132 within 1 degree.

Referring to FIGS. 40 and 42, the lens driving device 3130 may include a bobbin 3132. The bobbin 3132 may include a hollow portion 3132-1 in which the lens barrel 3120 is received therein. The bobbin 3132 may include a second flange portion 3132-2. The bobbin 3132 may include an inner portion 3132-3 provided on the second flange portion 3132-2. The inner portion 3132-3 of the bobbin 3132 may mean an inner surface of the bobbin 3132 that faces the first flange portion 3122 and the first step portion 3125 of the lens barrel 3120. The inner portion 3132-3 of the bobbin 3132 may include a depression 3132-4 corresponding to the protruding portion 3122-1 formed in the first flange portion 3122 of the lens barrel 3120. In addition, the depression 3132-4 may contact the protruding portion 3122-1 of the lens barrel 3120 when the lens barrel 3120 moves downward to the maximum within the hollow portion of the bobbin 3132, thereby limiting the downward movement of the lens barrel 3120. The depression 3132-4 of the bobbin 3132 may be provided with a second coupling portion 3132-6 corresponding to the first coupling portion 3122-2. The second coupling portion 3132-6 may be a protrusion protruding upward from the lower surface of the depression 3132-4. At this time, the first coupling portion 3122-2 is provided in a form that is connected to the outer surface of the protruding portion 3122-1 of the lens barrel 3120. Accordingly, the second coupling portion 3132-6 may be provided so as to be connected to the inner portion 3132 of the bobbin 3132 at the lower surface of the depression 3132-4 of the bobbin 3132.

The depression 3132-4 may be provided in multiple numbers. For example, the depression 3132-4 may include a plurality of depressions 3132-4 corresponding to each of the plurality of protruding portions 3122-1. The plurality of depressions 3132-4 may include first to fourth depressions 3132-4a, 3132-4b, 3132-4c, and 3132-4d corresponding to the first to fourth protruding portions 3122-1a, 3122-1b, 3122-1c, and 3122-1d. In addition, the second coupling portion 3132-6 may be provided in at least two or more depressions facing each other among the first to fourth depressions 3132-4a, 3132-4b, 3132-4c, and 3132-4d. For example, the second coupling portion 3132-6 may be provided in the first to third depressions 3132-4a, 3132-4b, and 3132-4c corresponding to the first coupling portion 3122-2. In addition, the fourth depression 3132-4d may not have the second coupling portion 3132-6.

An outer surface of the second coupling portion 3132-6 may have a curvature or a radius of curvature corresponding to an inner surface of the first coupling portion 3122-2. Preferably, an outer surface of the second coupling portion 3132-6 may have a curvature greater than a curvature of the inner surface of the first coupling portion 3122-2. For example, the outer surface of the second coupling portion 3132-6 may have a smaller radius of curvature than the inner surface of the first coupling portion 3122-2.

Referring to FIG. 43, a protruding portion 3122-1 may be provided on the first flange portion of the lens barrel 3120. In addition, a first coupling portion 3122-2 may be provided on the protruding portion 3122-1. The first coupling portion 3122-2 may be connected to the outer surface of the protruding portion 3122-1 and may penetrate the upper and lower surfaces of the protruding portion 3122-1.

In addition, a depression 3132-4 may be provided on the bobbin 3132. The depression 3132-4 may correspond to the protruding portion 3122-1 of the lens barrel 3120.

In addition, the depression 3132-4 of the bobbin 3132 may be provided with a second coupling portion 3132-6. The second coupling portion 3132-6 may correspond to the first coupling portion 3122-2.

At this time, an inner surface 3122-21 of the first coupling portion 3122-2 may have a curvature in a horizontal direction. In addition, an outer surface 3132-61 of the second coupling portion 3132-6 may have a curvature in the horizontal direction.

At this time, a curvature of the inner surface 3122-21 of the first coupling portion 3122-2 may be different from a curvature of the outer surface 3132-61 of the second coupling portion 3132-6. For example, the curvature of the inner surface 3122-21 of the first coupling portion 3122-2 may be greater than the curvature of the outer surface 3132-61 of the second coupling portion 3132-6. For example, a radius of curvature of the inner surface 3122-21 of the first coupling portion 3122-2 may be smaller than a radius of curvature of the outer surface 3132-61 of the second coupling portion 3132-6.

Accordingly, in a state where the first coupling portion 3122-2 is inserted into the second coupling portion 3132-6, the inner surface of the first coupling portion 3122-2 may not come into contact with the outer surface of the second coupling portion 3132-6. For example, in a state where the first coupling portion 3122-2 is inserted into the second coupling portion 3132-6, the lens barrel 3120 may be rotated within a certain angle relative to the bobbin 3132. At this time, the embodiment manages a rotation angle to be within 1 degree, and determines a difference value between the curvature or curvature radius of the inner surface 3122-21 of the first coupling portion 3122-2 and the curvature or curvature radius of the second coupling portion 3132-6 based thereon.

Meanwhile, the first coupling portion 3122-2 and the second coupling portion 3132-6 may include regions whose widths change. For example, the first coupling portion 3122-2 may be a through hole whose width gradually changes in the optical axis direction. In addition, the second coupling portion 3132-6 may be a protrusion whose width gradually changes in the optical axis direction. Preferably, the first coupling portion 3122-2 may have a width that decreases from a lower side toward an upper side. In addition, the second coupling portion 3132-6 may have a width that decreases from the lower side toward the upper side corresponding to the first coupling portion 3122-2. In addition, the curvature or curvature radius of each of the first coupling portion 3122-2 and the second coupling portion 3132-6 may mean the curvature or curvature radius of a region with a largest width or a region with a smallest width in each of the first coupling portion 3122-2 and the second coupling portion 3132-6. In the embodiment, the first coupling portion 3122-2 and the second coupling portion 3132-6 include regions with changing widths so that the first coupling portion 3122-2 can be easily inserted into the second coupling portion 3132-6. Accordingly, the first coupling portion 3122-2 can be inserted into the second coupling portion 3132-6 so that the alignment between them is automatically adjusted.

Referring to FIGS. 44 to 46, a first flange portion of a lens barrel 3120 may be provided with a protruding portion 3122-1. In addition, a first coupling portion 3122-21 may be provided in the protruding portion 3122-1. The protruding portion 3122-1 may include first to fourth protruding portions 3122-1a1, 3122-1a2, 3122-1a3, and 3122-1a4. In addition, the first coupling portion 3122-21 may be provided in the first to third protruding portions 3122-1a1, 3122-1a2, and 3122-1a3 among the first to fourth protruding portions 3122-1a1, 3122-1a2, 3122-1a3, and 3122-1a4. The first coupling portion 3122-21 may include three coupling portions 3122-2a1, 3122-2a2, and 3122-2a.

The first coupling portion 3122-21 may not be connected to the outer surface of the protruding portion 3122-1. For example, the first coupling portion 3122-21 may penetrate upper and lower surfaces of the protruding portion 3122-1 at a position spaced apart from the outer surface of the protruding portion.

In addition, a second coupling portion 3132-61 may be provided in the depression of the bobbin 3132. The second coupling portion 3132-61 may correspond to the first coupling portion 3122-21.

The second coupling portion 3132-61 may not be connected to the inner surface of the depression of the bobbin 3132. For example, the second coupling portion 3132-61 may protrude from the lower surface of the depression of the bobbin 3132 at a position spaced apart from the inner surface of the depression.

The depression may include first to fourth depressions 3132-4a1, 3132-4a2, 3132-4a3, and 3132-4a4. The second coupling portion 3132-61 may be provided in the first to third depressions 3132-4a1, 3132-4a2, and 3132-4a3 among the first to fourth depressions 3132-4a1, 3132-4a2, 3132-4a3, and 3132-4a4. The second coupling portion 3132-61 may include three coupling portions 3132-6a1, 3132-6a2, and 3132-6a3.

At this time, the first coupling portion 3122-21 may be a through hole having a circular shape with a specific curvature. In addition, the second coupling portion 3132-6 may be a protrusion having a circular shape corresponding to the first coupling portion 3122-21.

At this time, a curvature of the first coupling portion 3122-21 may be different from a curvature of the second coupling portion 3132-61. For example, the curvature of the first coupling portion 3122-21 may be larger than the curvature of the second coupling portion 3132-61. For example, a radius of curvature of the first coupling portion 3122-12 may be smaller than a radius of curvature of the second coupling portion 3132-61.

Accordingly, in a state where the first coupling portion 3122-21 is inserted into the second coupling portion 3132-61, the inner surface of the first coupling portion 3122-21 may not come into contact with the outer surface of the second coupling portion 3132-61. For example, in a state where the first coupling portion 3122-21 is inserted into the second coupling portion 3132-61, the lens barrel 3120 may be rotated within a certain angle with respect to the bobbin 3132. At this time, the embodiment manages the rotation angle to be within 1 degree, and determines a difference value between the curvature or curvature radius of the inner surface 3122-21 of the first coupling portion 3122-2 and the curvature or curvature radius of the second coupling portion 3132-6 based thereon.

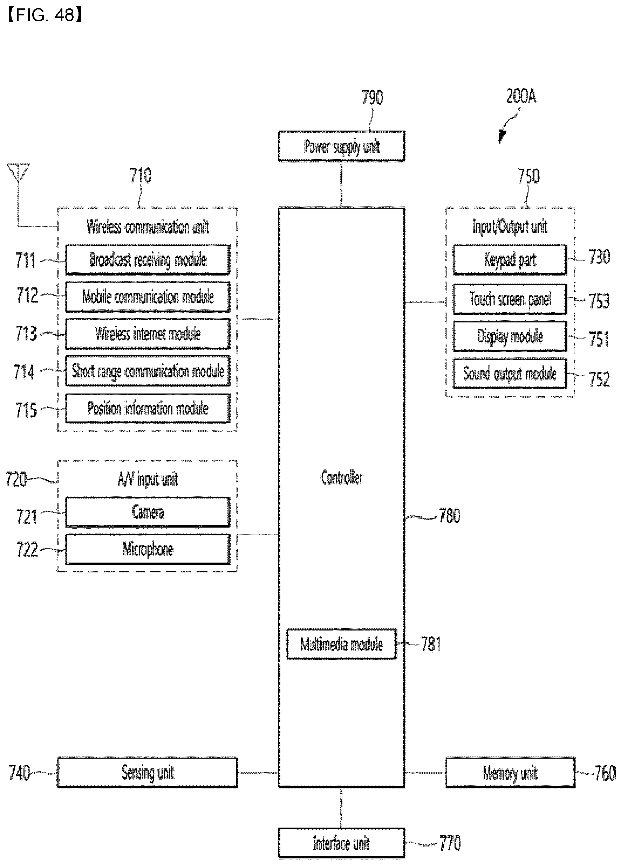

FIG. 47 is a perspective view of a portable terminal according to an embodiment, and FIG. 48 is a configuration diagram of a portable terminal shown in FIG. 47.

Referring to FIGS. 47 and 48, a portable terminal (200A, hereinafter referred to as a "terminal") may include a body 850, a wireless communication unit 710, an A/V input unit 720, a sensing unit 740, an input/output unit 750, a memory unit 760, an interface unit 770, a control unit 780, and a power supply unit 790.

The body 850 shown in FIG. 47 is in the form of a bar, but is not limited thereto, and there may be various structures such as a slide type, a folder type, a swing type, a swivel type, in which two or more sub-bodies are coupled to be movable relative to each other.

The body 850 may include a case (casing, housing, cover, etc.) forming an exterior. For example, the body 850 may be divided into a front case 851 and a rear case 852. Various electronic components of the terminal may be embedded in a space formed between the front case 851 and the rear case 852.

The wireless communication unit 710 may include one or more modules that enable wireless communication between the terminal 200A and the wireless communication system or between the terminal 200A and the network in which the terminal 200A is located. For example, the wireless communication unit 710 may include a broadcast reception module 711, a mobile communication module 712, a wireless internet module 713, a short-range communication module 714, and a location information module 715.

The A/V (Audio/Video) input unit 720 is for inputting an audio signal or a video signal, and may include a camera 721 and a microphone 722 and the like.

The camera 721 may include a camera module according to the embodiment shown in FIGS. 1 to 46.

The sensing unit may detect a current state of the terminal 200A, such as an opening/closing state of the terminal 200A, a position of the terminal 200A, a presence or absence of user contact, an orientation of the terminal 200A, acceleration/deceleration of the terminal 200A, etc. In addition, generate a sensing signal for controlling the operation of the terminal 200A. For example, when the terminal 200A is in the form of a slide phone, it is possible to sense whether the slide phone is opened or closed. In addition, it is responsible for sensing functions related to whether the power supply unit 790 is supplied with power, whether the interface unit 770 is coupled to an external device, and the like.

The input/output unit 750 is for generating input or output related to sight, hearing, or touch. The input/output unit 750 may generate input data for operation control of the terminal 200A, and may also display information processed by the terminal 200A.

The input/output unit 750 may include a keypad unit 730, a display module 751, a sound output module 752, and a touch screen panel 753. The keypad unit 730 may generate input data in response to a keypad input.

The display module 751 may include a plurality of pixels whose color changes according to an electrical signal. For example, the display module 751 may include at least of a liquid crystal display, a thin film transistor-liquid crystal display, an organic light-emitting diode, a flexible display, three-dimensional display (3D display).

The sound output module 752 may output audio data received from the wireless communication unit 710 in a call signal reception, a call mode, a recording mode, a voice recognition mode, or a broadcast reception mode, or the like; or audio data stored in the memory unit 760.

The touch screen panel 753 may convert a change in capacitance generated due to a user's touch on a specific region of the touch screen into an electrical input signal.

The memory unit 760 may store a program for processing and control of the controller 780, and may temporarily store input/output data (e.g., phone book, message, audio, still image, photo, video, etc.). For example, the memory unit 760 may store an image captured by the camera 721, for example, a photo or a moving picture.

The interface unit 770 serves as a passage for connecting with an external device connected to the terminal 200A. The interface unit 770 receives data from an external device, receives power and transmits it to each component inside the terminal 200A, or transmits data of the terminal 200A to an external device. For example, the interface unit 770 may include a wired/wireless headset port, an external charger port, a wired/wireless data port, a memory card port, a port for connecting a device having an identification module, and an audio I/O (Input/Output) port, video I/O (Input/Output) port, and an earphone port, and the like.

The controller (controller, 780) may control the overall operation of the terminal 200A. For example, the controller 780 may perform related control and processing for voice calls, data communications, video calls, and the like.

The controller 780 may include a multimedia module 781 for playing multimedia. The multimedia module 781 may be implemented within the controller 180 or may be implemented separately from the controller 780.

The controller 780 may perform a pattern recognition process capable of recognizing a handwriting input or a drawing input performed on the touch screen as characters and images, respectively.

The power supply unit 790 may receive external power or internal power under the control of the control unit 780 to supply power required for the operation of each component.

Although the embodiments of the present invention have been described with reference to the accompanying drawings, those skilled in the art to which the present invention pertains will be understood that the present invention may be implemented in other specific forms without modifying the technical spirit and essential features of the present invention. Therefore, it should be understood that the embodiments described above are illustrative in all aspects and not restrictive.

## Claims

1. A camera module comprising:
a lens driving device including a receiving space; and
a lens barrel disposed in the receiving space of the lens driving device,
wherein the lens barrel includes a first coupling portion,
wherein the lens driving device includes a second coupling portion, and
wherein the first coupling portion includes a first magnet, and the second coupling portion includes a second magnet corresponding to the first magnet.

2. The camera module of claim 1, wherein the first magnet is positioned on the second magnet, and
wherein a center of the first magnet and a center of the second magnet are aligned in an optical axis direction.

3. The camera module of claim 1, wherein the lens barrel includes:
a first flange portion;
a protruding portion protruding outward from an outer surface of the first flange portion; and
a first insertion groove provided at a lower surface of the protruding portion, and
wherein the first magnet is disposed in the first insertion groove.

4. The camera module of claim 3, wherein the lens driving device includes:
a second flange portion;
a depression provided at the second flange portion and corresponding to the protruding portion; and
a second insertion groove provided at a lower surface of the depression and aligned with the first insertion groove along an optical axis, and
wherein the second magnet is disposed in the second insertion groove.

5. The camera module of claim 4, wherein the lens driving device includes:
a bobbin including the receiving space and having a coil of a driving unit disposed on an outer circumferential surface; and
a housing disposed on an outside of the bobbin and coupled with a driving magnet of the driving unit corresponding to the coil, and
wherein the second flange portion, the depression, and the second insertion groove are provided in an inner portion of the bobbin.

6. The camera module of claim 5, wherein the first coupling portion further includes a first yoke spaced apart from the first magnet in the protruding portion and disposed around the first magnet, and
wherein the first yoke is provided to surround an outer surface of the first magnet facing the driving magnet.

7. The camera module of claim 5, wherein the second coupling portion further includes a second yoke spaced apart from the second magnet in the depression and disposed around the second magnet, and
wherein the second yoke is provided to surround an outer surface of the second magnet facing the driving magnet.

8. The camera module of claim 5, wherein the protruding portion includes a plurality of protruding portions provided on an outer surface of the first flange portion,
wherein the first coupling portion includes a plurality of first magnets provided in each of the plurality of protruding portions,
wherein the depression includes a plurality of depressions corresponding to each of the plurality of protruding portions, and
wherein the second coupling portion is aligned with the plurality of first magnets along an optical axis and is provided in each of the plurality of depressions.

9. The camera module of claim 1, wherein a planar area of the first magnet is smaller than a planar area of the second magnet.

10. The camera module of claim 1, further comprising:
a lens disposed in the lens barrel, and
wherein the lens including a freeform lens.
